(19) Europäisches Patentamt
European Patent Office
Office européen des brevets

(11) **EP 4 202 404 B1**

(12) **EUROPEAN PATENT SPECIFICATION**

(45) Date of publication and mention
of the grant of the patent:
**10.04.2024 Bulletin 2024/15**

(21) Application number: **21217617.6**

(22) Date of filing: **23.12.2021**

(51) International Patent Classification (IPC):
*B01F 23/47* (2022.01)        *B01F 23/57* (2022.01)
*B01F 35/21* (2022.01)        *B01F 35/22* (2022.01)
*H01M 4/04* (2006.01)        *G01N 11/08* (2006.01)
*B01F 27/50* (2022.01)        *B01F 27/72* (2022.01)
*B01F 35/75* (2022.01)

(52) Cooperative Patent Classification (CPC):
**B01F 23/57; B01F 23/47; B01F 27/50; B01F 27/72;
B01F 35/2111; B01F 35/2113; B01F 35/2209;
B01F 35/7549; H01M 4/0411;** G01N 11/08

(54) **SYSTEM AND METHOD FOR PRODUCING AND CONTROLLING PRODUCTION OF VISCOUS MATERIAL SUCH AS BATTERY PASTE FOR INDUSTRIAL APPLICATION**

SYSTEM UND VERFAHREN ZUR HERSTELLUNG UND STEUERUNG DER HERSTELLUNG VON VISKOSEM MATERIAL WIE Z. B. BATTERIEPASTE FÜR INDUSTRIELLE ANWENDUNG

SYSTÈME ET PROCÉDÉ DE PRODUCTION ET DE CONTRÔLE DE PRODUCTION DE MATÉRIAU VISQUEUX TEL QU'UNE PÂTE ACCUMULATEURS POUR APPLICATION INDUSTRIELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2023 Bulletin 2023/26**

(73) Proprietor: **Bühler AG
9240 Uzwil (CH)**

(72) Inventors:
• **MARTI, Jan
8400 Winterthur (CH)**
• **DOLDER, Valentin
9000 St. Gallen (CH)**

(74) Representative: **Leimgruber, Fabian Alfred Rupert
ThomannFischer
Elisabethenstrasse 30
4010 Basel (CH)**

(56) References cited:
**WO-A1-2020/216491      US-A1- 2018 003 606**

## Description

### *Field of the Invention*

The present disclosure relates to an industrial continuous manufacturing process comprising viscous materials in a production flow. Particularly, to a system and a method for an inline control and measuring systems connected to a continuous mixing process of a system comprising an extruder for mixing solid or viscous materials with liquids and/or solvents to form the paste or viscous materials, wherein the paste or viscous material is discharged through a supply line and at least one outlet of a plurality of outlets.

### *Background of the Invention*

During a typical continuous production of viscous pastes such as battery pastes with an extruder, the paste properties such as rheology, particle size and solid contents are measured offline in defined time intervals, i.e., 30 min. per interval. This measurement method involves high personal efforts and a time delay between manual sample taking and offline measurements leads to unknown product properties and quality during the entire continuous production process. Additionally, at the start and stop phase of the continuous production process with an extruder, the product is typically manually divided into production quality and waste by visual inspection since a decision by offline measurements would last too long, which would create enormous amounts of waste. Thus, the visual inspection may be inaccurate and can reduce production yield as well as the quality of the paste.

During production, samples may be taken, for example, in 30 minutes time intervals to offline measure product properties. With the help of these offline measurements, production fluctuations are tried to be detected, product properties measured, and multiple process parameters may be adjusted. With the existing offline measurement method, the continuous production process cannot be satisfactorily analyzed, process fluctuations can be hardly traced, and parameter adjustments are based on extremely limited numbers of measurements. Further, no adjustment is made with respect to outlet pressure of extruder in the continuous paste production process. The continuous production process is highly effected by the outlet pressure, which depends on subsequent pipes and fittings, product viscosity and throughput. In summary, there is a need to develop a system to improve the continuous production process of viscous pastes e.g. battery pastes by continuously measuring and visualizing product properties to get a real-time feedback on the paste quality. By improving the continuous production process the productivity is increased, reproducibility and controllability of the properties of the paste enhanced, investment and operational cost lowered.

To continuously determine the paste e.g. battery paste properties and quality inline and in real-time, the following product properties are particularly important to continuously inline measure: solid content, rheological behavior, density, pH, conductivity, dissolved oxygen level and particle size distribution. Regarding the subsequent coating process, specific product properties of the battery paste play a significant role in the production of batteries and more particular in the production of battery paste. In recent years, lithium-ion batteries have become widely used as power sources for driving vehicles including hybrid vehicles and electric vehicles, and portable electronic equipment such as mobiles and notebook computers. The batteries have positive electrodes and negative electrodes, which are coated by electrode slurries, otherwise known as battery paste, during production of batteries. In general, battery cells typically consist of five subcomponents: anode; cathode; separator; electrolyte; and cell container. The bill of materials for the battery cell identified the material composition and weight of each of the battery cell subcomponents. The anode is e.g. composed of a copper current collector with a coat of negative electrode paste. The negative electrode paste e.g. consists mainly of synthetic graphite, but typically also contains small amounts of binders. The cathode is e.g. composed of an aluminum current collector with a coat of positive electrode paste. The positive electrode paste can e.g. consist mainly of the positive active material, Li(NixCoyMnz)O2, and small amounts of carbon black and a binder. In both the positive and negative electrode pastes, a solvent is typically applied to slurrify the mixtures; after the electrode mixtures have been applied to the current collectors the electrodes are baked and the solvent evaporates.

The preparation of battery paste is a crucial process step in the production of batteries as the quality of the battery paste should be constantly monitored. Failure to meet the required quality of the battery paste may lead to low quality batteries, high operating cost, and inefficient production process. Particularly, viscosity of the paste must be measured at different shear rates as the battery paste is a shear thinning medium. The higher the shear rate, the lower the viscosity of the paste. The viscosity should be constantly measured to determine the quality of the paste.

For controlling and understanding rheological behavior of viscous materials, the exact measuring and monitoring of a material's rheological behavior is important. Such methods and systems for measuring and characterization of product properties are described in the technical field of rheometry. Some aspects of rheology are directed to the relation of the flow/deformation behavior of material and its internal structure (e.g., the orientation and elongation of polymer molecules), and the flow/deformation behavior of materials that cannot be described by classical fluid mechanics or elasticity. Thus, basic understanding of rheology and physical surface behavior, i.e. liquid flow, and solid-liquid interaction, is important for understanding coating processes and materials. Rheologic or rheometric measurements, as understood herein, is the measurement of the physical behavior and properties of any material when placed under stress. The invention is, however, directed essentially to liquids and pastes. The scope of characteristics may encompass the changes in the shape of a liquid as physical force is applied and/or removed. Viscosity is a key rheological property of coatings, in particular electrode paste, and plays an important role in the subsequent coating of pastes on foils. But also in general, viscosity is a significant property of fluids in industrial applications. Viscosity can be simply defined as the resistance of the material, as e.g. the paste or liquid, to flow and is related to the internal friction in the fluid. Shear flow is usually used to observe the flow behavior. In a shear flow, layers of the fluid move relative to each other due to a shear force. This external force generates a shear stress. Shear stress can be defined as a force acting across a given area of the fluid that results in a velocity gradient across the thickness of the specimen known as the "shear rate" or "shear velocity". The "shear viscosity" or "dynamic viscosity" associated with this process results from the ratio of shear stress to shear rate. Thus, the viscosity is the ratio of shear stress to shear rate. Throughout coating processes, mechanical forces of various types and quantities are exerted. The amount of shear force directly affects the viscosity value of non-Newtonian fluids. Most coatings undergo some degree of "shear thinning" phenomenon when worked by mixing or running on a coater. As shear rate is increased, the viscosity drops, in some cases, dramatically. For the coating processes, rheometric parameters have to be monitored as dynamic variables and it has to be controlled how they change throughout the production process of the coating paste as well as during the coating process itself. The mutual interaction, in which the production and/or coating process alters viscosity and rheological affects can change the processes puts the need for an on-going, permanent monitoring of the rheological parameters during the production and/or coating process.

As noted above, many viscous materials, such paste for coating battery electrodes, are so called "non-Newtonian fluids". In industrial applications, many uncomplicated fluids are classified as "Newtonian fluids". For these fluids, the viscosity is independent of the impressed shear force. Examples include water and simply structured hydrocarbons. As a fluid becomes more complex, for example due to the inclusion of air bubbles, droplets, particles, or polymers, fluids may exhibit more complicated behavior and behave as non-Newtonian fluids. For non-Newtonian fluids, the viscosity depends on the magnitude of the impressed shear force. These types of fluids are usually referred to as "structured fluids" or "complex fluids." Many products found in industry and commerce exhibit such non-Newtonian behavior. Well-known examples are toothpaste, mayonnaise, paints, cosmetics, and cements. These products are basically substances with structurally viscous behavior, i.e. the viscosity decreases with increasing shear rate. However, there are highly structured so-called "dilatant" substances in which the viscosity increases with the shear rate. In most cases, materials are needed that have a high viscosity at low shear rates to prevent layering or creep, but become thinner at higher shear rates so that the materials can be applied or processed more easily. Therefore, a single measured value for viscosity is not sufficient to describe the viscosity of such materials. Instead, viscosity must be measured over a broader range of shear rates or shear stresses, or at least at a shear rate relevant to the process or application. Non-Newtonian fluids may also exhibit other phenomena such as yield stress, thixotropy, and viscoelasticity, which can have a not insignificant effect on material behavior and product performance. Further viscosity measures are the "relative viscosity", the "specific viscosity" and the "intrinsic viscosity". These viscosity measures refer to dispersions and indicate the contribution of the dissolved or dispersed phase to the viscosity of a solution or dispersion. In the prior art, for example, viscosimeter are used to measure viscosity of a fluid. For liquids with viscosities which vary with flow conditions, a rheometer as measuring device is used. In general, a rheometer can be considered as a special type of viscometer. Viscometers only measure under one flow condition.

In particular regarding a coating processes, rheological properties play an important role in the production of batteries and more particular in the production of battery paste. In recent years, lithium-ion batteries have become widely used as power sources for driving vehicles including hybrid vehicles and electric vehicles, and portable electronic equipment such as mobiles and notebook computers. The batteries have positive electrodes and negative electrodes which are coated by electrode slurries, otherwise known as battery paste, during production of batteries. The preparation of battery paste is a crucial process step in the production of batteries as the quality of the battery paste should be constantly monitored. Failure to meet the required quality of the battery paste may lead to low quality batteries, high operating cost, and inefficient production process. Particularly, viscosity of the paste must be measured at different shear rates as the battery paste is a shear thinning medium. Higher the shear rate, lower the viscosity of the paste. The viscosity should be constantly measured to determine the quality of the paste.

The present inventive inline control and measuring system can be applied to various known conventional manufacturing processes, e.g. providing an inline control and measuring system for analyzing the end product of the continuous mixing process by an extruder, as e.g. the production of lithium-ion batteries. Regarding the production of lithium-ion batteries, in the prior art, the manufacturing of lithium-ion electrodes is a multistep process. Typically, the raw materials (active materials, additives, binders) are dispersed or dissolved in a solvent. The resulting slurry/suspension is subsequently coated on a current collector foil, dried/immobilized and compressed/calandered. The finished electrodes are then cut into the required size. Traditionally, the slurry preparation step is performed in batch mixing systems which implicates various disadvantages: long mixing times, batch-to-batch variation in product quality, high specific process energy, high labor costs, scalability issues, etc. Therefore, there is a clear trend towards fully continuous mixing of electrode slurries in twin-screw mixers. The fully continuous mixing process is based on co-rotating twin-screw extruder technology. The raw materials (powders and liquids) are accurately and continuously fed into the process at different positions of the extruder process zone. In this way, the short-constant dosing performs a large extent of the actual distributive mixing. The dispersing (dispersive mixing) of the powder components is fine-tuned by adjusting various process parameters such as extruder zone length, extruder screw element geometry, extruder screw configuration, screw speed, dosing sequence, kneading concentration (solid concentration in selected sections of the process zone), process zone temperature, pressure profile in the process zone.

Prior to the coating process, the electrode slurry needs to be degassed as excessive air bubbles would result in a coating with defects. Instead of doing this in degassing tanks, a combination of vacuum pump and side-stuffer(s) can be directly connected to the extruder. This makes offline degassing obsolete and permits to directly transfer the slurry to the coating step. Another distinctive feature of the continuous mixing process is the possibility to skip the lengthy binder dissolution process which is generally required in batch mixing systems. Common binders/thickeners used in the lithium-ion cell manufacturing such as - but not excluding - PVDF (for NMP-based cathode) or CMC (for water-based anode) can directly be fed into the mixing process in their original form (dry powder) instead of pre-dissolving them in an upstream process. The moisture-sensitive nature of selected battery raw materials often requires processing the slurry in a dry room atmosphere. The fully continuous mixing system (extruder and periphery) can be executed all-closed, and it is therefore possible to blanket the whole system with inert gas, making a dry room obsolete. Further distinguishing features of the fully continuous slurry production are short processing time, lower specific process energy, consistent quality (i.e. less waste), greatly reduced labor costs, high productivity per mixing line (several tons per hour), efficient process optimization, scalability.

In the prior art systems, there is a clear trend towards electrode manufacturing with no or reduced solvent content. This is motivated by the request to avoid potentially toxic solvents and to skip the energy-intensive evaporation. Apart from savings due to no/lower drying energy this process also has the potential to lower the footprint as well as capital costs of electrode manufacturing. Furthermore, for some material systems the fully dry processing might be a prerequisite as contact with water nor organic solvent is not tolerable. Reducing or eliminating the solvent amount in the electrode leads to a significant increase in viscosity. Proper mixing and dispersing in common batch mixers are not possible anymore. Therefore, the twin-screw extruder technology plays an important role in next generation processes. Various material systems and process routes based on extruder technology are known in the prior art where the herein presented inline control and measuring systems can be applied to. An exemplary selection is stated in the following:

(A) Material system: (i) Solvent-free: a) Powders: active material anode (e.g., graphite), active material cathode (e.g., lithium metal oxides), conductive additives (e.g. carbon black, carbon nanotubes), binder (e.g. PTFE, PVDF, thermoplastic), solid electrolyte for ASSB-cells, etc., and (ii) Reduced solvent content (e.g., 65-95 % solid content): a) Powders: active material anode (e.g., graphite), active material cathode (e.g., lithium metal oxides), conductive additives (e.g. carbon black, carbon nanotubes), binder (e.g. PTFE, PVDF, CMC/SBR), solid electrolyte for all solid-state batteries, etc., b) Solvents: NMP, acetone, isopropanol, dimethyl carbonate, ethylene carbonate, propylene carbonate, etc.;

(B) Mixing / dispersing process in extruder: (i) Dosing of powder components into extruder can be performed all at once (at the onset of the process zone) or stepwise (e.g., dosing of shear-sensitive components further downstream with the help of a side-feeder), (ii) Solvent-free systems often rely on PTFE and its capability to fibrillate under shear. The degree of fibrillation can be greatly influenced by the screw configuration, screw speed, throughput, and the temperature profile. (iii) Reduced solvent content: Similar to the conventional slurry mixing process, major process parameters are screw configuration, screw speed, dosing sequence, kneading concentration, temperature profile.

(C) Shaping of electrode product: Various approaches for shaping the product are known: forming intermediate products (such as pellets or continuous extrudates) or the direct formation of a thin film. For instance, it is possible to operate the extruder with or without a die. Further periphery can be mounted (e.g., granulator/pelletizer, single screw extruder or pump for additional pressure generation, etc.) and further equipment might be required for thin-film formation, compression and lamination. Depending on the equipment configuration and the material system a multitude of different product shapes and consistencies is achievable. Examples: (i) Solvent free: a) Granules (open extruder; size of granules can be tuned by extruder screw configuration); subsequently (heat) pressed into a film and laminated to the current collector, b) Melt extrusion of a system with thermoplastic binder and shaping with an extruder die. (ii) Reduced solvent: a)Shaping with the help of an extruder die, e.g., strand/rod (circular die), film (slot die), b) Pellets (circular die in combination with granulator/pelletizer) as intermediate product, c) Granules (open extruder; size of granules can be tuned by extruder screw configuration) as intermediate product, d) Flowable pasty product as intermediate product.

In the prior art, the document US2018003606A1 discloses an evaporation or spray-drying process with a spray-drying equipment or an evaporator comprising continuously measuring the shear viscosity of a liquid product. The shear viscosity is used as input parameter to control the evaporator or the spray nozzle. It allows inline control of the evaporator or the spray nozzle. Further, the document WO2020216491A1 discloses a method for producing batteries, in which a suspension with a variable product parameter is extruded in an extension process by means of an extruder as an electrode paste. A number of extrusion parameters of the extrusion process is determined, an extruder-specific stress model is calculated on the basis of the extrusion parameters, and the extrusion process is controlled or regulated on the basis of the stress model.

## Summary of the Invention

It is an object of the present disclosure to provide an inline control and measuring system, which is connected at the production outlet of a continuous mixing process e.g. twin-screw extruder for viscous material, such as battery paste or the like. The system should be able to continuously measure product properties of the viscous material and/or paste, produced by a continuous mixing process e.g. twin-screw extruder, in real time. A continuous data acquisition of the product properties and process parameters should be performable by the inline control and measuring system. As such, the system performs inline measurements of this properties and monitors specific process parameters in real time during the continuous production process. The system continuously and automatically classifies the quality of the paste into production, reprocessing or waste based on the inline measurement data during the production process, thus increases production yield and reducing waste as low quality product does not reach production tank / subsequent production process and high quality product is fed to the subsequent production process. The quality classification is executed by comparing predefined set values including specified high quality region, e.g. a production region, a low quality region, e.g. a rework region, and waste regions with actual measurement values of specific product properties such as viscosity, density, solid content, pH, conductivity, particle size distribution, or oxygen content. Depending on the actual measurement value of a specific product property and its production, waste and rework regions the product should be classifiable in production, rework or waste quality. As an additional object of the invention, the system should be able to automatically control and adjust the process parameters based on the inline measurement data during the production process, thus improving quality of the paste. Pressure at outlet of extruder should automatically be adjustable using a back pressure valve, in order to stabilize and optimize the mixing process of the extruder.

It is to be noted that not only the mentioned inline measurements such as viscosity, density, solid content, pH, conductivity, particle size distribution and oxygen content can be important parameters to monitor the mixing process. Measured variables of the extruder and its periphery e.g. extruder torque / extruder barrel temperature or of additional sensors such as near infrared, ultrasonic or Raman spectrometry sensors may be used for identifying the product quality and for improving the mixing process, too.

It is to be noted that during production, if the pressure at the extruder outlet is kept constant with a controlled back pressure valve, i.e. with a constant pressure at the extruder outlet, the mixing/dispersing conditions inside the extruder are constant. The pressure at the extruder outlet influences the filling degree of the extruder and accordingly the mixing/dispersing inside of the extruder.

According to the present disclosure, these objects are achieved, particularly, by the features of the independent claims. In addition, further advantageous embodiments can be derived from the dependent claims and related descriptions.

According to the present invention, the above-mentioned objects for an inline control and measuring system are achieved in that the inline control and measuring systems is connected to a continuous mixing process of a system comprising an extruder for mixing solid or viscous materials with liquids and/or solvents to form the paste or viscous materials, wherein the paste or viscous material is discharged through a supply line and at least one outlet of a plurality of outlets, in that the system comprises a bypass line branching from the supply line for receiving a volume of the paste from the supply line, wherein the bypass line comprises a plurality of pipes and a plurality of sensors, in that the system comprises a controller in communication with the extruder and/or the plurality of sensors in the bypass line, wherein the controller (i) receives signals of at least one of the plurality of the sensors in the bypass line, (ii) determines product properties of the paste based on at least the sensor measurements of the sensors in the bypass line, (iii) discharges the paste through the at least one outlet of the plurality of outlets based on the determined product properties, and (iv) controls the extruder and/or the pressure valve, when the determined product properties of the paste are different from target product properties, and in that the plurality of outlets comprises a first outlet communicated with a production line, wherein the first quality paste is discharged through the first outlet by being fed to a next production step, a second outlet communicated with the extruder, wherein the second quality paste is discharged through the second outlet by being fed back to the continuous mixing process via the extruder, and a third outlet communicated with a waste tank, wherein the third quality paste is discharged through the third outlet and collected in the waste tank.

The system can e.g. be connected by a tube to the continuous mixing process e.g. an extruder mixing solid materials and liquids to produce a viscous material and/or paste such as battery paste. The paste can e.g. be pushed through the endplate of the extruder and flows through the systems supply line and finally is discharged through at least one outlet of a plurality of outlets. The system can further include a flow meter disposed on the beginning of the systems supply line for measuring the total throughput of the paste production, and a pressure valve disposed on the supply line for controlling the pressure which is acting on the endplate of the extruder. The system further includes a bypass line branching or a volume flow meter from the supply line for receiving a volume of the paste from the supply line. In addition, sensors measuring the density, pH, conductivity, viscosity, particle size distribution, and solid content etc. can e.g. be included in the bypass line. These sensors are used to identify the product properties of the paste e.g. battery paste.

In an embodiment, the plurality of pressure sensors includes a first pressure sensor disposed at downstream end of the pump, a second pressure sensor disposed at a first distance from the first pressure sensor, a third pressure sensor disposed at a second distance from the second pressure sensor, and a fourth pressure sensor disposed at a third distance from the third pressure sensor. The lengths of the tubes (and adapters) can preferably be chosen to be identical as the distance between the pressure sensors, otherwise it may be difficult to connect them.

In an embodiment, the plurality of pipes includes a first pipe having a first inner diameter and a first length at least equal to the first distance, a second pipe having a second inner diameter and a second length at least equal to the second distance, and a third pipe having a third inner diameter and a third length at least equal to the third distance. The second inner diameter is different from the first inner diameter and the third inner diameter is different from the first inner diameter and the second inner diameter.

The system further includes a controller in communication with the extruder, the flow meter, the pressure valve, and the plurality of pressure sensors. The controller (i) receives signals indicative of pressure and flow rate of the paste flowing through the plurality of pipes of the bypass line, (ii) determines a viscosity of the paste based on at least the pressure and the flow rate of the paste, (iii) discharges the paste through the at least one outlet of the plurality of outlets based on the determined viscosity, and (iv) controls the extruder, when the determined viscosity of the paste is different from a target viscosity.

In an embodiment, the controller receives the flow rate of the paste flowing through the bypass line, and regulates the pump, when actual flow rate of the paste is different from a target flow rate.

In an embodiment, the system includes a pump coupled to the supply line at downstream end of the flow meter, and the pump receives and discharges the volume of the paste through the bypass line.

In an embodiment, the system includes a flow sensor disposed on the first pipe between the first pressure sensor and the second pressure sensor for generating signals indicative of volume flow rate and/or density of the paste flowing through the bypass line.

In an embodiment, the system includes a metering device disposed on the bypass line for measuring pH and electrical conductivity of the paste.

In an embodiment, the system includes an ultrasonic sensor, i.e. a sensor based on ultrasonic principles, disposed on the bypass line for measuring and/or calculating solid contents in the paste.

In an embodiment, the system includes a pressure sensing device disposed at a junction at which the bypass line branches from the supply line for generating signals indicative of pressure of the paste flowing through the supply line.

In an embodiment, the system can e.g. include a gas sensing device disposed on the supply line for generating signals indicative of gaseous and/or oxygen content in the paste. The gaseous content in the paste can e.g. comprise oxygen and the gas sensing device can e.g. be an oxygen sensing device.

The controller identifies the paste as a first quality paste when the determined viscosity of the paste is equal to the target viscosity (or the target production region which lays around the target viscosity), a second quality paste when the determined viscosity of the paste is different from the target viscosity and equal to a predefined viscosity (i.e. when the viscosity is in a predefined rework parameter range, or a third quality paste when the determined viscosity of the paste is different from the target viscosity corresponding to the first quality paste and the predefined viscosity corresponding to the second quality paste (i.e. when the viscosity is in a waste region of quality). As a variant, not only viscosity is used as a parameter to identify "quality" of the viscous material and/or paste. Additionally or separately other measurements such as density, solid content, pH, oxygen content, particle size distribution or conductivity can e.g. be used to determine the quality of the past and further provide classification of production, rework and waste.

In an embodiment, the plurality of outlets includes a first outlet communicated with a production line and the first quality paste is discharged through the first outlet, a second outlet communicated with the extruder and the second quality paste is discharged through the second outlet, and a third outlet communicated with a tank and the third quality paste is discharged through the third outlet and collected in the tank.

In another aspect of the present disclosure, a method for producing a paste for an industrial application using the above system is provided. The system includes an extruder for mixing solid or viscous raw materials and solvents to form the paste, e.g. the battery paste, a supply line and at least one outlet of a plurality of outlets for discharging the paste, a flow meter for measuring rate of flow of the paste through the supply line, and a pressure valve for controlling a pressure at which the paste is discharged through the supply line. The method includes receiving a volume of the paste from the supply line using a bypass line, which includes a plurality of sensors, a plurality of pipes and a plurality of pressure sensors. The method further includes receiving signals indicative of pressure and flow rate of the paste, or other signals of measurements of the paste flowing through the plurality of pipes of the bypass line using a controller, determining a viscosity of the paste based on at least the pressure and the flow rate of the paste using the controller, discharging the paste through the at least one outlet of the plurality of outlets based on the determined viscosity using the controller, and controlling the extruder, the flow meter, and the pressure valve using the controller, when the determined viscosity of the paste is different from a target viscosity.

In an embodiment, the method includes identifying the paste using the controller as a first quality paste when the determined viscosity of the paste is equal to the target viscosity, a second quality paste when the determined viscosity of the paste is different from the target viscosity and equal to a predefined viscosity, or a third quality paste when the determined viscosity of the paste is different from the target viscosity corresponding to the first quality paste and the predefined viscosity corresponding to the second quality paste. The first quality paste is discharged through a first outlet of the plurality of outlets communicated with a production line, the second quality paste is discharged through a second outlet of the plurality of outlets communicated with the extruder, and the third quality paste is discharged through a third outlet of the plurality of outlets communicated with a tank.

In another aspect of the present disclosure, a paste produced by the system is used for coating battery electrodes.

Other features and aspects of this disclosure will be apparent from the following description and the accompanying drawings.

### Brief Description of the Drawings

The present invention will be explained in more detail by way of example in reference to the drawings in which:

Figure 1A shows a diagram, exemplary illustrating a side view of an inline control and measuring systems connected to an extruder and/or a continuous mixing process for the production of viscous materials, as e.g. the production of a paste for an industrial application, according to an embodiment of the present disclosure. The system is able to measure slurry and/or viscous material properties with sensors and to identify with sensor data the quality of the product, which is produce by the twin-screw extruder

Figure 1B shows a diagram, exemplary illustrating a perspective view of the system of FIG. 1A, according to an embodiment of the present disclosure;

Figure 2 is a schematic block diagram of the exemplary system of Fig. 1A, according to an embodiment of the present disclosure;

Figure 3 is a schematic block diagram illustrating a production process and quality control parameters associated with the production process, according to an embodiment of the present disclosure;

Figure 4 is a graphical representation showing a correlation between shear rate and shear viscosity;

Figure 5 is a schematic block diagram illustrating the production process, according to another embodiment of the present disclosure; and

Figure 6 is a schematic flow diagram of a method of producing the paste, according to an embodiment of the present disclosure.

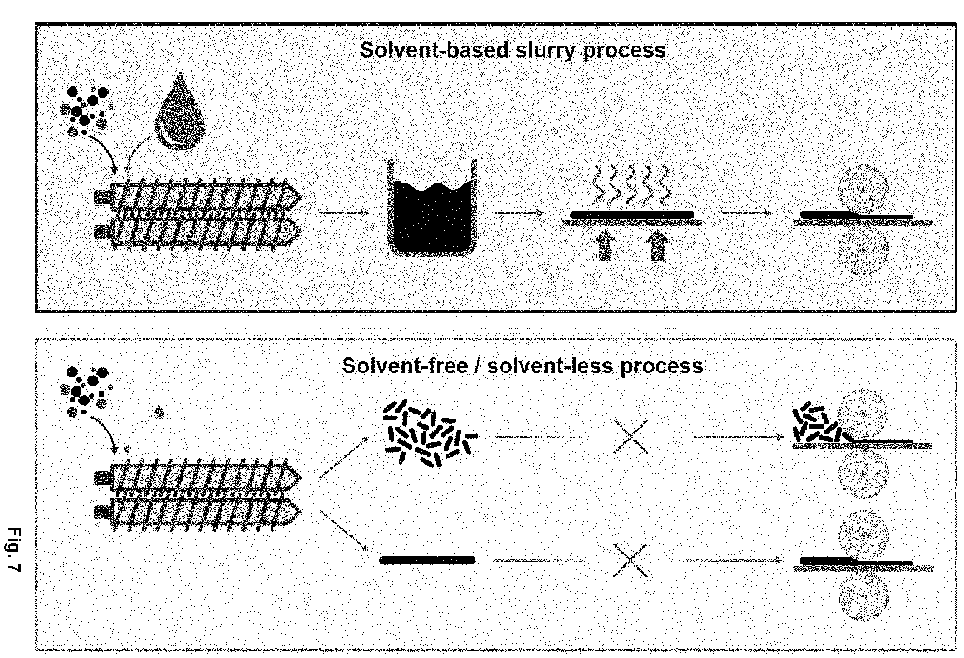

Figure 7 is a schematic diagram providing a simplified illustration of a conventional process (solvent-based) vs. next generation process (solvent free / reduced solvent).

Figures 8 and 9 are schematic diagrams illustrating that by means of the inventive measuring system, an operator is enabled to select the properties that the system is to analyze and set the setpoint and quality ranges for each selected property. The quality ranges can e.g. be defined as follows density, pH, conductivity, viscosity at a given shear rate, solid content, and oxygen and/or gaseous content. In particular, a viscosity can be set based on a set and/or definable rheology curve.

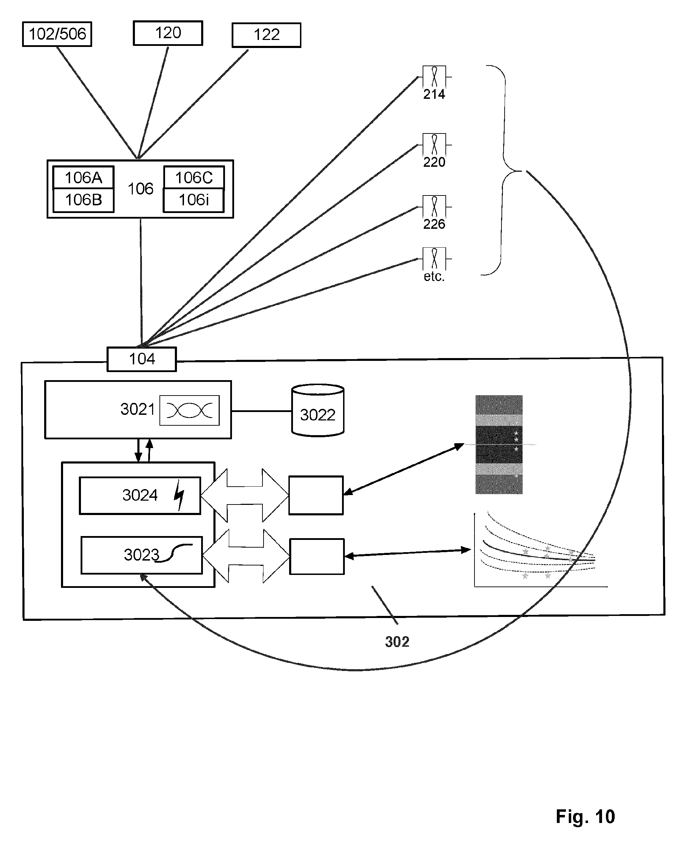

Figure 10 is a schematic block diagram illustrating an exemplary system 100 including the direction valve 116 coupled to the controller 302 for bi- or unidirectional signal transmission, where a product is disposed on the end of the supply line 104 which is coupled to the plurality of outlets 106. The direction valve 116 directs the flow of the paste to one outlet of the plurality of outlets 106 steered by the signals received from the controller 302 and the signal generator 3021, wherein the signal generation is based on the quality of the paste determined by the measuring data, which the controller 302 receives from the bypass line 202 measuring devices and/or other measuring devices/sensors monitoring the process.

### Detailed Description of the Preferred Embodiments

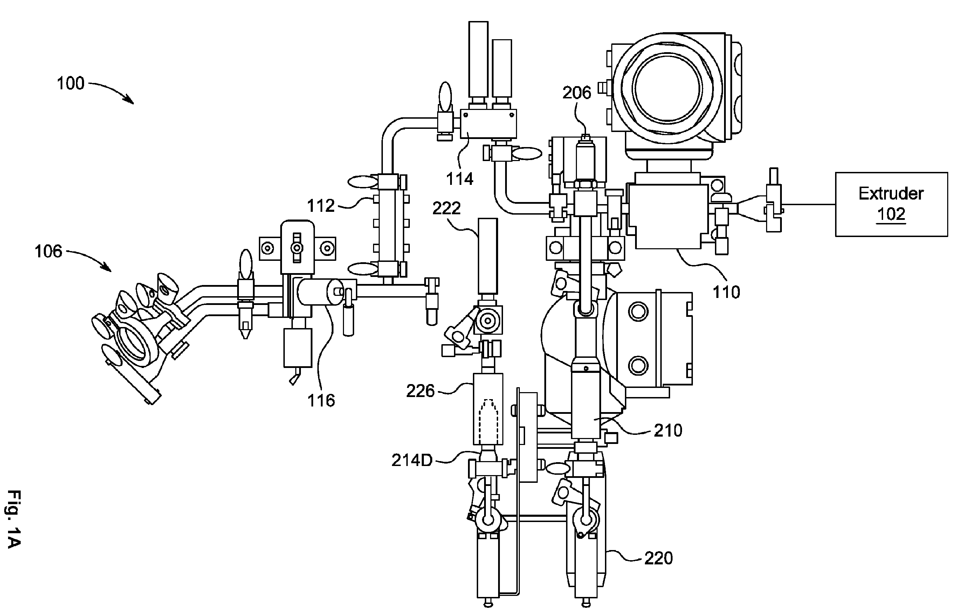

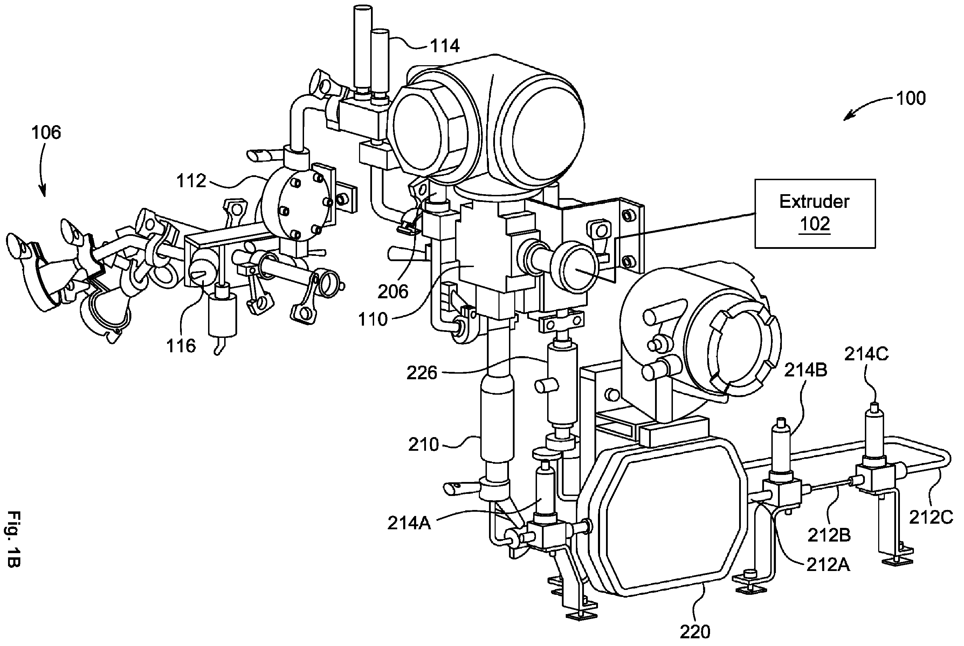

Figure 1 illustrates, schematically, an architecture for a possible implementation of an embodiment of the inventive inline control and measuring system and method connected to an extruder and/or a continuous mixing process for the production of viscous materials, as e.g. the production of a paste or viscous material, such as battery paste with defined rheological properties for industrial application. Reference will now be made in detail to specific embodiments or features, examples of which are illustrated in the accompanying drawings. Wherever possible, corresponding, or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claim.

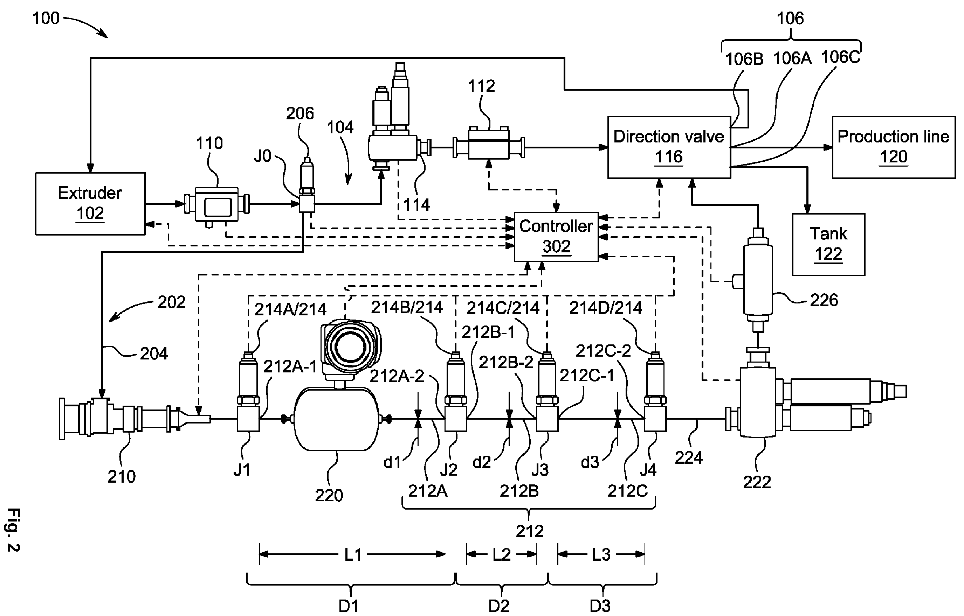

Referring to fig. 1A and fig. 1B, a side view and a perspective view, respectively, of a system 106 for continuously measuring product properties and simultaneously detecting quality measures and thus getting a quality feedback of the paste during the industrial production of the paste for an industrial application are illustrated, according to certain embodiments of the present disclosure. The system 100 is used for preparing the paste, otherwise referred to as electrode slurries, to produce batteries. Particularly, the paste is used for coating battery electrodes such as positive electrodes and negative electrodes. The system 100 includes an extruder 102 for mixing a solid or viscous raw material (such as active materials, conductive additives and binders) and a liquid to form the paste. The solid material and the liquid are separately and controllably fed to the extruder 102 to form the paste. The system 100 further includes a supply line 104 (see figure 2) coupled to the extruder 102. The paste produced by the extruder 102 is discharged through the supply line 104 and at least one outlet of a plurality of outlets 106. The supply line 104 includes one or more conduits having identical inner diameters or different inner diameters to allow the flow of the paste therethrough.

The system 100 further includes a volume flow meter or a flow meter 110 disposed on the supply line 104 for measuring rate of flow of the paste through the supply line 104. The volume or flow meter 110 is used for constantly measuring a mass, or a volume, of the paste coming from the extruder 102. The volume of the paste flowing through the supply line 104 is measured every second to ensure the mass of the paste flowing through the supply line 104 is constant. If the flow of the paste is not constant, then it is understood that the solid material and the liquid are not mixed in the extruder 102 as desired. Either liquid dosing may be more or less than a desired dosing value or solid dosing may be more or less than a desired dosing value. It is to be noted that it is possible to reduce or increase the flow rate while keeping the solid to liquid ratio constant without reaching an undesired mixing condition in the extruder.

The system 100 further includes a pressure valve 112 disposed on the supply line 104 for controlling pressure of the paste discharged through the supply line 104. In an embodiment, the pressure valve 112 may be controlled by compressed air. The pressure valve 112 is used for maintaining pressure of the paste constant while flowing through the supply line 104. The pressure valve 112 may be preset with a desired pressure value such that if the pressure of the paste flowing through the supply line 104 is more than the desired pressure value, then the pressure valve 112 may open the membrane to have a larger cross section to minimize pressure inside the supply line 104. Thus, the pressure valve 112 assists in setting the pressure of the paste constant at the outlet of the extruder 102.

The system 100 further includes a gas sensing device 114 disposed on the supply line 104 for generating signals indicative of gaseous content, as e.g. dissolved oxygen content, in the paste. In an embodiment, the gas sensing device 114 is used to continuously measure oxygen content in the paste. An inline degassing system (not shown) is used in association with the extruder 102 to minimize or avoid oxygen content in the paste during the mixing process. The data received from the gas sensing device 114 may be communicated with the inline degassing system to reduce or avoid oxygen content in the paste. In some embodiments, the gas sensing device 114 may be used to detect presence of any gas in the paste during the production of the paste.

The system 100 further includes a direction valve 116 disposed on the end of the supply line 104 and coupled to the plurality of outlets 106. The direction valve 116 directs the flow of the paste to one outlet of the plurality of outlets 106 based on a quality of the paste. In an embodiment, the direction valve 116 may be actuated to an open position or a closed position by compressed air and springs. The plurality of outlets 106 includes a first outlet 106A connected to production tank where, for example, the paste is fed later to a next production step, a second outlet 106B connected to a rework tank (as this product can e.g. be fed back to mixing process), and a third outlet 106C connected to a waste tank 122, the waste having low quality slurry. In some embodiments, the second outlet 106B and the third outlet 106C may be combined to form a single outlet. The first outlet 106A, the second outlet 106B, and the third outlet 106C are collectively referred to as 'the plurality of outlets 106' or 'the outlets 106', and individually referred to as 'the outlet 106', unless otherwise specifically mentioned.

Referring to fig. 2, a schematic block diagram of the system 100 is illustrated, according to an embodiment of the present disclosure. Referring to fig. 1A, fig. 1B and fig. 2, the system 100 includes a bypass line 202 branching from the supply line 104 for receiving a volume of the paste from the supply line 104. The bypass line 202 includes a first conduit 204 that branches from the supply line 104 at a junction 'J0'. The volume of the paste received by the bypass line 202 is a fraction of the mass of the paste discharged by the extruder 102. Further, the volume of the paste received by the bypass line 202, i.e. flowrate of bypass can be independent of flowrate of supply line, but within the system the bypass flow rate can be adapted to get different flow rates and therefore different shear rates in the tube sections which are used to determine viscosity. A pressure sensing device 206 is disposed at the junction 'J0' at which the bypass line 202 branches from the supply line 104. The pressure sensing device 206 is used for generating signals indicative of pressure of the paste flowing through the supply line 104. The pressure sensing device 206 measures prevailing pressure of the paste at the junction 'J0' and use the data to regulate the pressure valve 112 to maintain a desired pressure in the supply line 104.

The bypass line 202 of the system 100 includes a pump 210 coupled to the supply line 104 to extract the volume of the paste from the supply line 104. Particularly, the pump 210 is coupled to one end of the first conduit 204 and another end of the first conduit 204 is coupled to the supply line 104 at the junction 'J0'. The pump 210 extracts the volume of the paste from the supply line 104 through the first conduit 204 and discharges the paste through the bypass line 202. In an embodiment, the pump 210 is a screw pump. The pump 210 is also used for controlling the flow of the volume of the paste through the bypass line 202. The pump 210 transports the paste at different throughputs through the bypass line 202, and each throughput is kept constant for a desired time interval. This is also relevant for describing the principle of the rheometer to measure the viscosity at different shear rates.

The bypass line 202 further includes a plurality of pipes 212 coupled to downstream end of the pump 210, and a plurality of pressure sensors 214 disposed on the plurality of pipes 212. The plurality of pipes 212 includes a first pipe 212A coupled to the pump 210, first pipe 212A is piping inside the flow sensor 220 (first pipe 212A is the piping inside the flow sensor 220), a second pipe 212B coupled to the first pipe 212A, and a third pipe 212C coupled to the second pipe 212B. The first pipe 212A, the second pipe 212B, and the third pipe 212C are collectively referred to as 'the plurality of pipes 212' or 'the pipes 212', and individually referred to as 'the pipe 212', unless otherwise specifically mentioned. The plurality of pressure sensors 214 includes a first pressure sensor 214A disposed at the downstream end of the pump 210, a second pressure sensor 214B disposed on the bypass line 202 at a first distance 'D1' from the first pressure sensor 214A, a third pressure sensor 214C disposed on the bypass line 202 at a second distance D2 from the second pressure sensor 214B, and a fourth pressure sensor 214D disposed on the bypass line 202 at a third distance 'D3' from the third pressure sensor 214C. The first pipe 212A has a first inner diameter 'd1' and a first length 'L1' defined between a first end 212A-1 and a second end 212A-2. The first end 212A-1 of the first pipe 212 is coupled to the downstream end of the pump 210 at a first junction 'J1'. The first length 'L1' of the first pipe 212A is at least equal to the first distance 'D1' between the first pressure sensor 214A and the second pressure sensor 214B, and the first pressure sensor 214A is disposed at the first junction 'J1'. The second pipe 212B has a second inner diameter 'd2' and a second length 'L2' defined between a first end 212B-1 and a second end 212B-2. The first end 212B-1 of the second pipe 212B is coupled to the second end 212A-2 of the first pipe 212A at a second junction 'J2'. The second length 'L2' of the second pipe 212B is at least equal to the second distance 'D2' between the second pressure sensor 214B and the third pressure sensor 214C, and the second pressure sensor 214B is disposed at the second junction 'J2'. The second inner diameter 'd2' of the second pipe 212B is different from the first inner diameter 'd1' of the first pipe 212A. The third pipe 212C has a third inner diameter 'd3' and a third length 'L3' defined between a first end 212C-1 and a second end 212C-2. The first end 212C-1 of the third pipe 212C is coupled to the second end 212B-2 of the second pipe 212B at a third junction 'J3'. The third length 'L3' of the third pipe 212C is at least equal to the third distance 'D3' between the third pressure sensor 214C and the fourth pressure sensor 214D, and the third pressure sensor 214C is disposed at the third junction 'J3'. The third inner diameter 'd3' of the third pipe 212C is different from the first inner diameter 'd1' of the first pipe 212A and the second inner diameter 'd2' of the second pipe 212B.

The system 100 further includes a flow sensor 220, the tube of the flow sensor 220 being used as tube 212A, disposed on the first pipe 212A between the first pressure sensor 214A and the second pressure sensor 214B for generating signals indicative of the flow rate of the paste flowing through the bypass line 202. The flow sensor 220 is also used for generating signals indicative of density of the paste. The measured value of the volume flow or volume flow rate or the mass flow rate is used for controlling the pump 210, as such the pump 210 may extract the volume of the paste from the supply line 104 at a target flow rate or volume flow rate. The measured values of density and flow can e.g. be used for generating the viscosity of the paste by using the pressure loss over each tube 212A, 212B and 212C. Also, the pressure loss over each tube 212A, 212B and 212C can be used for generating and/or calculating for each tube 212A, 212B and 212C the product's viscosity at a specific shear rate, which depends on volume flow and cross section of each of these tubes. The pump 210 in coordination with the flow sensor 220, thus, allows the paste to flow through the bypass line 202 at the target flow rate.

The system 100 further can include a metering device 222, e.g. a flow cell including a pH and electrical conductivity sensor, disposed on the bypass line 202 for measuring pH and electrical conductivity of the paste. Particularly, the bypass line 202 includes a second conduit 224 coupled to the second end 212C-2 of the third pipe 212C at a junction 'J4', and the metering device 222 is disposed on the second conduit 224 to measure the pH value and electrical conductivity of the paste. The measurement of electrical conductivity helps to understand the mixing process within the extruder 102 and quality of raw materials such as solid materials and solvents used for making the paste or viscous product.

The system 100 further includes an ultrasonic sensor 226 disposed on the second conduit 224 for measuring/calculating solid contents in the paste. The solid-state sensor 226 may be used for measuring the solid contents in the paste via a correlation function. The measured value of the solid contents helps to understand the performance and fluctuations of the solid and liquid dosing of the extruder 102 during the mixing process. A measured deviation of the target solid content can e.g. indicate that the solid or liquid dosings do not work properly.

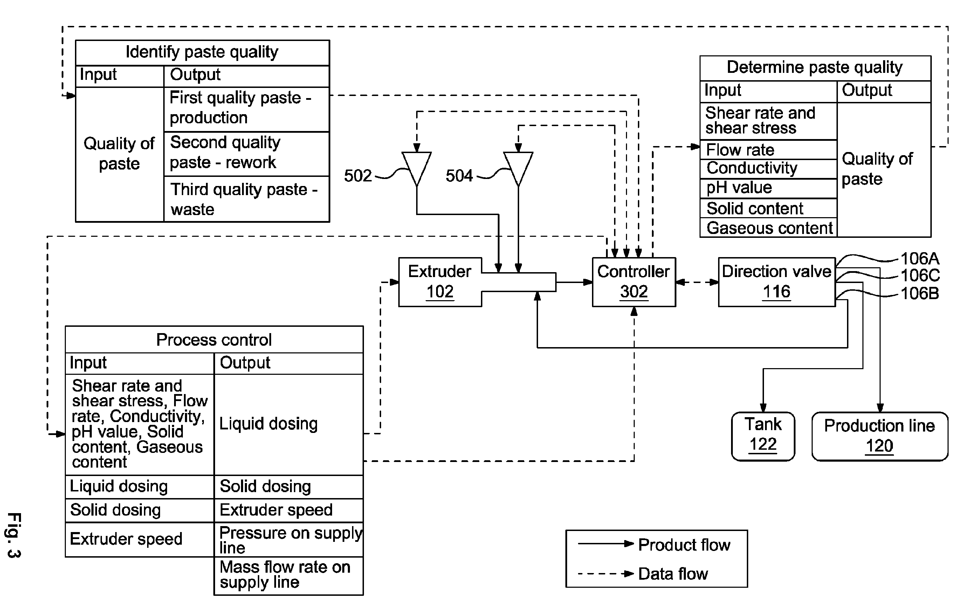

Referring to fig. 3, a schematic block diagram of a production process and multiple quality control parameters associated with the production process are illustrated, according to an embodiment of the present disclosure. Referring to fig. 1A through fig. 3, the system 100 includes a controller 302 in communication with the extruder 102, the flow meter 110, the pressure valve 112, the pressure sensing device 206, the gas sensing device 114, the direction valve 116, the pump 210, the flow sensor 220, the plurality of pressure sensors 214, the metering device 222, and the ultrasonic sensor 226. During the production of the paste, the controller 302 receives data such as the pressure of the paste flowing through the supply line 104, the rate of flow of the paste, and gas content such as oxygen in the paste from the pressure sensing device 206, the flow meter 110, and the gas sensing device 114, respectively. The controller 302 further receives signals indicative of pressure of the paste flowing through the plurality of pipes 212 of the bypass line 202. Particularly, the controller 302 receives the pressure of the paste flowing through the first pipe 212A, the second pipe 212B and the third pipe 212C from the first pressure sensor 214A, the second pressure sensor 214B, the third pressure sensor 214C, and the fourth pressure sensor 214D. The first pressure sensor 214A generates signals indicative of pressure of the paste proximate the first end 212A-1 of the first pipe 212A and the second pressure sensor 214B generates signals indicative of pressure of the paste proximate the second end 212A-2 of the first pipe 212A, otherwise the pressure proximate the first end 212B-1 of the second pipe 212B. A change in pressure is determined based on a value of the pressure at the first end 212A-1 and the second end 212A-2 of the first pipe 212A. Further, the third pressure sensor 214C generates signals indicative of pressure of the paste proximate the second end 212B-2 of the second pipe 212B, otherwise the pressure proximate the first end 212C-1 of the third pipe 212C. A change in pressure is determined based on a value of the pressure at the first end 212B-1 and the second end 212B-2 of the second pipe 212B. Further, the fourth pressure sensor 214D generates signals indicative of pressure of the paste proximate the second end 212C-2 of the third pipe 212C. A change in pressure is determined based on a value of the pressure at the first end 212C-1 and the second end 212C-2 of the third pipe 212C. The controller 302 is also in communication with the flow sensor 220 and receives signals indicative of the flow rate of the paste flowing through the bypass line 202 and the density of the paste. The data indicative of the flow rate is further communicated with the pump 210 by the controller 302 to control operation of the pump 210 such that the target flow rate or volume flow rate of the paste is maintained in the bypass line 202 constantly. Particularly, the controller 302 receives the flow rate of the paste flowing through the bypass line 202 and regulates the pump 210, when actual flow rate of the paste is different from the target flow rate. The controller 302 is also in communication with the flow sensor 220, the metering device 222, and the ultrasonic sensor 226 to receive input parameters such as the rate of flow of the paste, density of the paste, the pH value, the electrical conductivity, and the solid contents present in the paste.

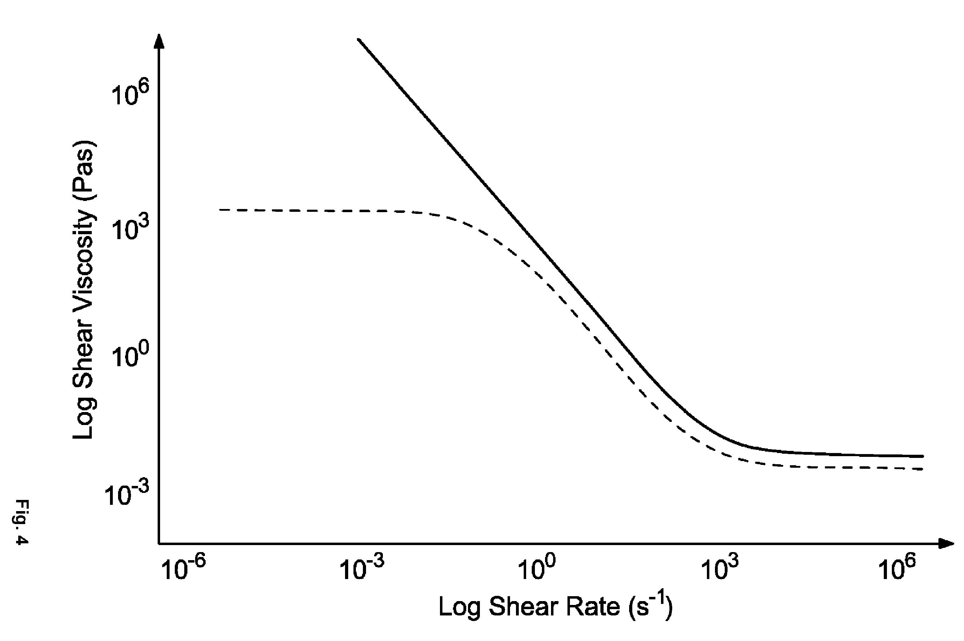

The controller 302 further determines a viscosity of the paste based on the pressure and the flow rate of the paste flowing though the bypass line 202. The viscosity is generally defined as resistance of fluids to flow and is related to internal friction of the fluids. Flow characteristics of the fluid is further defined based on shear flow, which in turn defined by a shear stress and a shear rate. The shear stress is a function of a shear force acting on a given area of the fluid. Based on the change in pressure measured in each of the first pipe 212A, the second pipe 212B, and the third pipe 212C, the controller 302 determines variation in the pressure of the paste flowing through the bypass line 202 using a mathematical relation or a correlation function. The pressure variation in the paste flowing through the bypass line 202 corresponds to the shear stress of the paste flowing through the bypass line 202. Further, shear strain of the paste flowing through the bypass line 202 is determined. The shear strain is generally defined as a deformation in dimensional characteristics of a pattern of the flow of the fluid due to the shear stress. In an embodiment, the shear strain of the paste flowing through the bypass line 202 is determined based on the first, second and third inner diameters 'd1', 'd2', and 'd3' of the plurality of pipes 212 and the pressure variation in the plurality of pipes 212. Based on the shear strain, shear rate of the paste flowing through the bypass line 202 is determined. Shear rate is generally defined as a rate at which the deformation is occurred in the fluid. The viscosity of the fluid is defined based on a mathematical relation between the shear stress and the shear rate. In an embodiment, the controller 302 determines the viscosity of the paste using the pressure variation in the plurality of pipes 212, which corresponds to the shear stress, and the size such as the first, second and third inner diameters 'd1', 'd2', and 'd3' and the first, second and third lengths 'L1', 'L2', and 'L3' of the plurality of pipes 212 and the flow rate of the paste flowing through the bypass line 202, which corresponds to the shear rate. As shown in fig. 4, the viscosity decreases with increasing shear rate and vice versa.

The controller 302 further discharges the paste through the at least one outlet of the plurality of outlets 106 based on the determined viscosity. The controller 302 identifies the paste as a first quality paste when the actual product property lays within a prespecified region (e.g. marked as: production quality region). Product properties to identify the quality can e.g. be viscosity, density, pH, electrical conductivity, oxygen content, solid content etc. The target viscosity of the paste may be defined as a viscosity of the paste required to produce the battery with desired performance. The target value of product properties as well as regions of production, rework and waste can e.g. be adjustable and storable in a memory or storage device of the controller 302, e.g. before the production process starts or during the production process. The target product properties can e.g. be determined based on lab tests and experimental results about the performance of the batteries. The first quality paste is discharged through the first outlet 106A to the production line 120 for manufacturing the batteries. The controller 302 also determines the first quality of the paste based on the input parameters such as the rate of flow of the paste in the bypass line 202, the density of the paste, the pH value, the electrical conductivity, the solid content present in the paste and the gaseous contents present in the paste. The controller 302 can also identify the paste as a second quality paste when the determined viscosity of the paste is different from the target viscosity range and equal to a predefined viscosity range. The predefined viscosity of the paste may be defined as a viscosity of the paste that has low quality compared to the paste having the target viscosity. Further, the paste having the viscosity equal to the predefined viscosity is reworked to manufacture the batteries. The second quality paste is discharged through the second outlet 106B and discharged to the extruder 102 for further mixing and processing to achieve the target viscosity. The controller 302 can also identify the paste as a third quality paste when the determined viscosity of the paste is different from the target viscosity range corresponding to the first quality paste and the predefined viscosity range corresponding to the second quality paste. The third quality paste is discharged through the third outlet 106C and collected in the tank 122. The third quality paste is considered as waste and stored in the tank 122. Upon identifying the paste as the first quality paste, the second quality paste, or the third quality paste, the controller 302 communicates with the direction valve 116 to allow the paste to flow through one outlet of the plurality of outlets 106.

The controller 106 can e.g. control the extruder 102 and as a variant the pressure valve 112, when the determined viscosity of the paste is different from the target viscosity. When the controller 302 determines that the viscosity of the paste is different from the target viscosity and is equal to the predefined viscosity, then the controller 302 identifies the paste as the second quality paste and actuates the direction valve 116 to discharge the second quality paste through the second outlet 106B. As the second outlet 106B is communicated with the extruder 102, the second quality paste is mixed with the solid material and the liquid received in the extruder 102. The controller 302 receives input such as the determined viscosity, density flow rate, electrical conductivity, pH value, presence of solid contents, and presence of gases such as oxygen in the paste. Further, the controller 302 receives input indicative of dosing of the liquid, dosing of the solid material, and rotational speed of the extruder 102. Upon receiving the input, the controller 302 regulates the operation, especially the rotational speed of the extruder 102, and controls the pressure of the paste at the outlet of the extruder 102 using the pressure valve 112 based on the prevailing pressure data received from the pressure sensing device 206. Further, the controller 302 regulates the dosing of the liquid and the solid material into the extruder 102. Thus, the controller 302 regulates the various process parameters and quality parameters of the system 100 to produce the paste having the target viscosity. When the controller 302 determines that the viscosity of the paste is different from the target viscosity and the predefined viscosity, then the controller 302 identifies the paste as the third quality paste and actuates the direction valve 116 to discharge the third quality paste through the third outlet 106C, as such the third quality paste is received within the tank 122. When the controller 302 determines that the viscosity of the paste is equal to the target viscosity, then the controller 302 identifies the paste as the first quality paste and discharges the first quality paste through the first outlet 106A, as such the first quality paste can e.g. be discharged to a production tank, where paste is used for subsequent battery manufacturing steps.

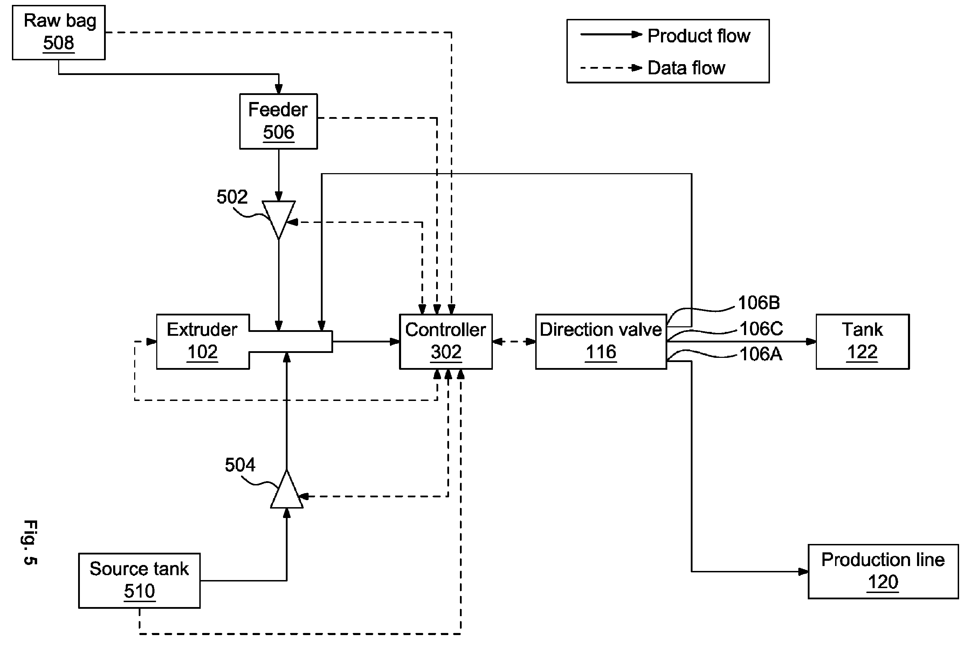

Referring to fig. 5, a schematic diagram of the production process is illustrated, according to another embodiment of the present disclosure. The system 100 includes the extruder 102 which is in communication with all solid dosing devices 502 and all liquid dosing devices 504. Each solid dosing device 502 feeds solid material into the extruder 102 and each liquid dosing device 504 feeds liquid into the extruder 102. The solid dosing devices e.g. can comprise a gravimetric feeder and the feeder can e.g. be a volumetric feeder. It is to be noted, that in a plant usually multiple solid and liquid dosings are or can be used. The controller 302 is in a two way communication with the solid dosing devices 502 and the liquid dosing devices 504 to receive data indicative of the flow rate of the solid material and the liquid into the extruder 102 and to control the flow rate of the solid material and the liquid, respectively. The solid dosing device 502 is further communicated with a feeder 506 to feed the solid material into the solid dosing device 502. The feeder 506 is in communication with the controller 302 to provide data indicative of refill cycle time. The refill cycle time may be defined as an amount of time required for the feeder 506 to refill a specific volume of solid material into the solid dosing device. The feeder 506 is further communicated with a raw bag 508 to store the solid material therein. The raw bag 508 is in communication with the controller 302 to provide identification details of the solid material, which may correspond to manufacturing details and composition of the solid material. Similarly, the liquid dosing device 504 is communicated with a source tank 510 to store the liquid required for mixing with the solid material to form the paste. The source tank 510 is in communication with the controller 302 to provide identification details of the liquid, which may correspond to manufacturing details and composition of the liquid.

The controller 302 receives input parameters such as the density, the viscosity at different shear rates, flow rate, temperature of the paste, room temperature, room humidity, electrical conductivity of the paste, oxygen content, and solid material content, and determines the quality of the paste. As a variant, the input parameters can be adjusted to desired set value and ranges of waste, rework and production quality. The controller 302 is designed to find quality index for the viscosity, quality index for the composition of the paste, and quality index for the accuracy and consistency of properties of the paste. The controller 302 receives real time data from the various sensors of the system 100 to predict characteristics and composition of the paste. Further, the quality index is used by the controller 302 to identify the quality of the paste and actuates the direction valve 116 to discharge the paste based on the identified quality of the paste.

The controller 302 can e.g. control the solid dosing devices 502, liquids dosing devices 504, or extruder 102 screw speed in order to adapt the production process and achieve the required paste quality, which is called production quality, i.e. to achieve the quality of the paste equal to the first quality paste. The controller 302 is designed to control viscosity of the paste by adjusting the one or more liquid dosing devices 504, separate the second quality paste to rework, add small amount of the second quality paste, or the rework quality paste, back to the extruder 102, separate the third quality paste, or the waste quality paste, to the tank 122, and fine tune operating parameters of the extruder 102 to improve the quality of the paste. The controller 302 requires real-time data of the composition of the paste, the real-time data measured by and capture from the various sensors of the system 100. As mentioned, the quality index or only set values and regions of important process parameters can e.g. be used by the controller 302 to identify the quality of the paste and actuates the direction valve 116 to discharge the paste based on the identified quality of the paste, to control possible correlations on how the operating parameters of the extruder 102 and on how the liquid and solid dosing devices 502, 504 influence the quality of the paste.

The production process of the paste using the system 100 is illustrated in detail herein below with reference to fig. 1A through fig. 5. At the start of the production process, the extruder 102 and the liquid dosing device 504 are actuated by a plant control. The paste containing solids and solvents come out of the extruder 102 and is discharged through the supply line 104. Parts of the paste are extracted by the pump 210 into the bypass line 202. The controller 302 determines the quality of the paste based on measured values of properties of the paste, such as the density, viscosity, and solid contents, received from the flow sensor 220, the plurality of pressure sensors 214, and the solid-state sensor 226, respectively. The controller 302 receives the measured value of the pressure in the supply line 104 from the pressure sensing device 206 and controls the pressure valve 112 to keep the pressure at the outlet of the extruder constant to not influence the mixing process of the extruder 102. The controller 302 further identifies the quality of the paste as the third quality paste and actuates the direction valve 116 to discharge the paste through the third outlet 106C to the tank 122.

The solid dosing device 502 is further actuated by the controller 302 and the properties of the paste discharged from the extruder 102 gradually approaches a target value of the properties. The flow meter 110, the flow sensor 220, the plurality of pressure sensors 214, the solid-state sensor 226, the gas sensing device 114, the metering device 222 and the pressure sensing device 206 constantly monitor and measure the properties of the paste. The controller 302 receives the measured value of the pressure in the supply line 104 from the pressure sensing device 206 and controls the pressure valve 112 to increase the pressure at the outlet of the extruder 102. The controller 302 further receives the measured value of the properties of the paste and identifies the quality of the paste as the second quality paste and actuates the direction valve 116 to discharge the paste through the second outlet 106B for rework.

The extruder 102, the liquid dosing device 504, and the solid dosing device 502 run constantly, and the production process becomes constant. The quality of the paste and the properties of the paste gradually achieve the target quality and the target properties, respectively. The controller 302 constantly measures the properties of the paste using the various sensors and identifies that the quality of the paste improves. Based on the pressure data from the pressure sensing device 206, the controller 302 sets the pressure at the outlet of the extruder 102 to target pressure and identifies the quality of the paste as the first quality paste. The controller 302 further actuates the direction valve 116 to discharge the paste through the first outlet 106A to the production line 120.

During the production process, the mixing process in the extruder 102 runs constantly and no process fluctuation is observed. The controller 302 constantly receives the properties of the paste from the various sensors and tries to recognize irregularities. The controller 302 further determines the viscosity of the paste at different shear rates based on the volume of paste extracted by the pump 210 from the supply line 104 at different flow rates. The quality of the paste continues to be the first quality paste to produce batteries. In case the controller 302 determines that the viscosity of the paste is higher than the target viscosity, the controller 302 identifies the paste as the second quality paste and actuates the direction valve 116 to discharge the paste through the second outlet 106B. Simultaneously, the controller 302 regulates the rotational speed of the extruder 102 and controls the dosing of the liquid and the solid material to achieve the properties of the paste to the target value of the properties. When the dosing of the liquid and the solid materials fails, the quality of the paste decreases. The controller 302 detects failure of the liquid and solid dosages and determines the quality of the paste based on the properties of the paste received from the various sensors. The controller 302 further identifies the quality of the paste as the third quality paste and actuates the direction valve 116 to discharge the paste through the third outlet 106C to the tank 122.

At the end of the production process, the one or more solid dosing devices 502 are shut down first. When the solid dosing is stopped, the quality of the paste decreases, and higher content of solvent is found to be in the product. With the help of the ultrasonic sensor 226 (measuring the solid content not the solid-state), the controller 302 can determine that the paste has small amount of the solid content. Also density and/or viscosity signals can be used for indications for low solid content. The controller 302 further receives the measured value of the pressure in the supply line 104 from the pressure sensing device 206 and controls the pressure valve 112 to minimize the pressure at the outlet of the extruder 102. The controller 302 further identifies the quality of the paste as the third quality paste and actuates the direction valve 116 to discharge the paste through the third outlet 106C to the tank 122. Further, the one or more liquid dosing devices 504 are shut down. The controller 302 recognizes that only the solvent remains in the supply line 104 and controls the pressure valve 112 to minimize the pressure at the outlet of the extruder 102. The controller 302 further identifies the quality of the paste as the third quality paste. Finally, the extruder 102 is shut down to end the production process.

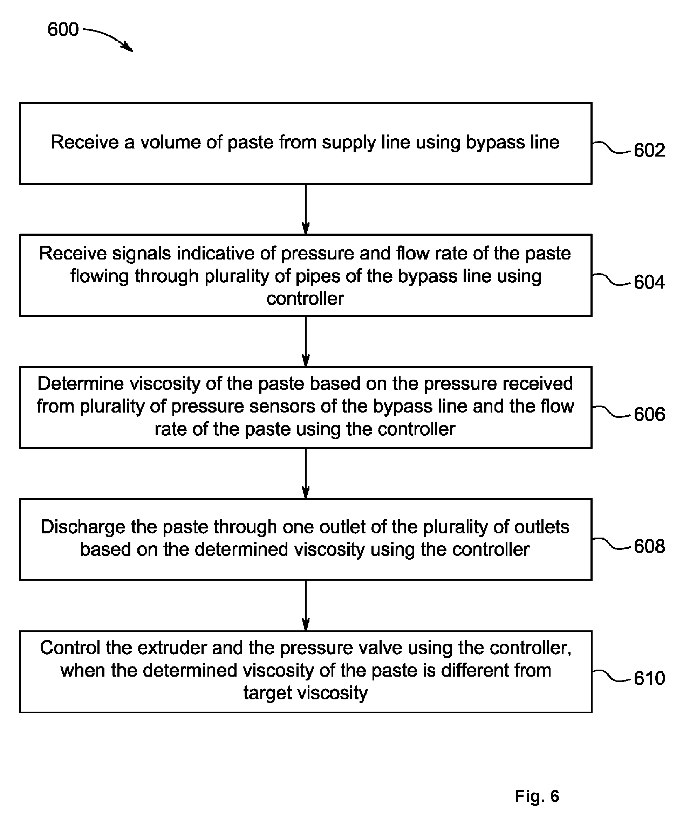

Referring to fig. 6, a schematic flow diagram of a method 600 of producing the paste is illustrated, according to an embodiment of the present disclosure. The method 600 is described with reference to the system 100 illustrated in fig. 1A through fig. 5. The method 600 may be described in the general context of computer executable instructions which may be located in both, local and remote computer storage media, including memory storage devices. The order in which the method 600 is described is not intended to be construed as a limitation, and any number of the described method steps can be combined in any order to implement the method 600. Additionally, individual steps may be removed or skipped from the method 600 without departing from the spirit and scope of the present disclosure. In an embodiment, the method 600 may be executed by the controller 302 of the present disclosure.

At step 602, the method 600 includes receiving the volume of the paste from the supply line 104 using the bypass line 202, which includes the plurality of pipes 212 and the plurality of pressure sensors 214. The first conduit 204 of the bypass line 202 branches from the supply line 104 at the junction 'J0' and the pump 210 that is coupled to the first conduit 204 of the bypass line 202 extracts the volume of the paste from the supply line 104 through the first conduit 204 and discharges the paste through the bypass line 202. The pump 210 regulates the rate of flow of the paste received within the bypass line 202 to the target flow rate based on the input such as the flow rate value received from the flow sensor 220. The controller 302 receives the input from the flow sensor 220 and communicates the input with the pump 210.

At step 604, the method 600 includes receiving signals indicative of the pressure and the flow rate of the paste flowing through the plurality of pipes 212 of the bypass line 202 using the controller 302. The controller 302 receives the pressure of the paste flowing through the first pipe 212A, the second pipe 212B and the third pipe 212C of the plurality of pipes 212 from the first pressure sensor 214A, the second pressure sensor 214B, the third pressure sensor 214C, and the fourth pressure sensor 214D of the plurality of sensors 214. The controller 302 determines the change in pressure in each of the first pipe 212A, the second pipe 212B, and the third pipe 212C based on the signals received from the plurality of sensors 214. The controller 302 further receives signals indicative of the flow rate of the paste flowing through the bypass line 202 and the density of the paste from the flow sensor 220.

At step 606, the method 600 includes determining the viscosity of the paste based on at least the pressure and the flow rate of the paste using the controller 302. The controller 302 determines the viscosity of the paste based on various input parameters. The input parameters include the change in pressure measured in each of the first pipe 212A, the second pipe 212B, and the third pipe 212C, the dimensional characteristics such as the first, second and third inner diameters 'd1', 'd2', and 'd3' and the first, second and third lengths 'L1', 'L2', and 'L3' , respectively, of the plurality of pipes 212, the flow rate of the paste flowing through the bypass line 202, the density of the paste, the pH value, the electrical conductivity, the solid contents present in the paste, and the gaseous content present in the paste.

At step 608, the method 600 includes discharging the paste through the at least one outlet of the plurality of outlets 106 based on the determined viscosity using the controller 302. The controller 302 identifies the paste as the first quality paste when the determined viscosity of the paste is equal to the target viscosity, identifies the paste as the second quality paste when the determined viscosity of the paste is different from the target viscosity and equal to the predefined viscosity, or identifies the paste as the third quality paste when the determined viscosity of the paste is different from the target viscosity corresponding to the first quality paste and the predefined viscosity corresponding to the second quality paste. The first quality paste is discharged through the first outlet 106A to the production line 120 for manufacturing the batteries, the second quality paste is discharged through the second outlet 106B and discharged to the extruder 102 for further mixing and processing to achieve the target viscosity, and the third quality paste is discharged through the third outlet 106C and collected in the tank 122. Upon identifying the paste as the first quality paste, the second quality paste, or the third quality paste, the controller 302 communicates with the direction valve 116 to allow the paste to flow through one of the plurality of outlets 106.

At step 610, the method 600 includes controlling the extruder 102 and the pressure valve 112 using the controller 302, when the determined viscosity of the paste is different from the target viscosity. When the controller 302 determines that the viscosity of the paste is different from the target viscosity and is equal to the predefined viscosity, then the controller 302 identifies the paste as the second quality paste and actuates the direction valve 116 to discharge the second quality paste through the second outlet 106B. The controller 302 receives input such as the determined viscosity, the density, the flow rate, the electrical conductivity, the pH value, presence of solid contents, and presence of oxygen and/or gases in the paste. Further, the controller 302 receives input indicative of dosing of the liquid, dosing of the solid material, and rotational speed of the extruder 102. Upon receiving the input, the controller 302 regulates the operation, especially the rotational speed of the extruder 102, and controls the pressure of the paste at the outlet of the extruder 102 using the pressure valve 112 based on the prevailing pressure data received from the pressure sensing device 206. Further the controller 302 regulates the dosing of the liquid and the solid material into the extruder 102. Thus, the controller 302 regulates such various process parameters and the quality parameters of the system 100 to produce the paste having the target viscosity.

It is to be noted that all these steps 602-610 are preferably done or processed continuously and can be done over and over again as production cycles.

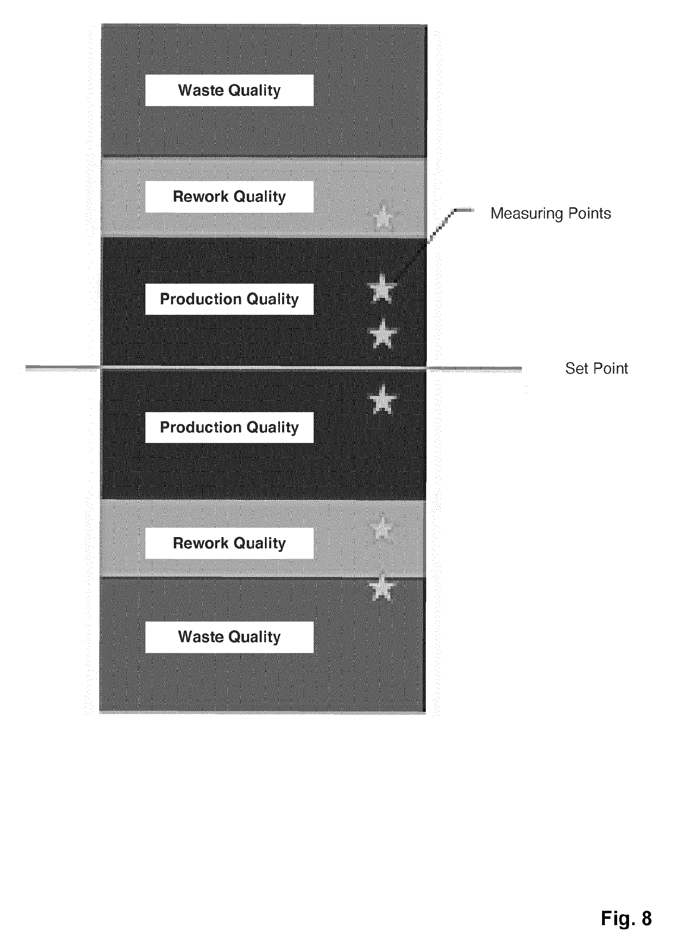

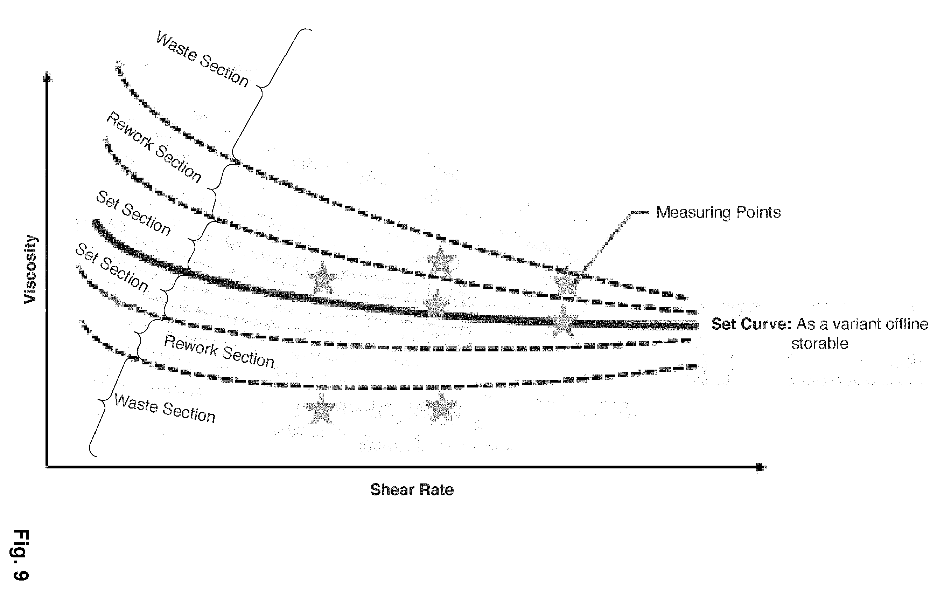

Finally, as a further embodiment variant, the following measurements can e.g. be made in the bypass: Density, viscosity at several shear rates (e.g. with a minimum of 3), solids content, pH, particle size distribution, and conductivity. Measuring these properties is important for assessing whether the product meets a certain quality and the continuous process is stable. As illustrated by figures 8 and 9, by means of the inventive measuring system, an operator can e.g. be enabled to select the properties that the system is to analyze and set the setpoint and quality ranges for each selected property. The quality ranges can e.g. be defined as follows density, pH, conductivity, viscosity at a given shear rate, solid content, oxygen and/or gaseous content, and particle size distribution. In particular, a viscosity can be set based on a set and/or definable rheology curve,

The product properties are of enormous importance for the further processes in production because:

- **Solids**: There should always be an identical solid content in the paste, otherwise the solids loading may change during coating on the film. Ideally, there is always an identical solid loading on the entire film to improve battery performance.

- **Viscosity**: The viscosity is a key point in the coating of the electrode paste. Firstly, it is important for the coating nozzle to have a similar viscosity in order to create the coating evenly from the nozzle. Second, when the coating dries, the viscosity must be high so that the coating does not flow during drying.

- **Density**: It is important that the individual raw materials are in the same composition in the paste. The density provides information about this.

- **pH and conductivity:** pH and conductivity may also have influence on the process and/or product properties.

- **Particle size distribution:** particle size distribution is important to understand the dispersing effect of the mixing process. Additionally, the particle size distribution may show the dispersion degree of the solids, which corelates with the overall battery performance.

**Oxygen content:** The oxygen content of the slurry may be important since it influences the solid loading of the film produced during coating of the electrode slurry on a foil. With irregular oxygen content the mass loading of the film varies. In addition, gas bubbles in the slurry can induce coating defects. The invention thus allows, not to lead the produced paste with poor quality into further production if a product property no longer meets the production quality. The paste is usually produced in a production container or waste container. A rework container could serve as a return to the mixing process.

By means of the inventive controller 302, which receives the above mentioned measuring data such as the density, viscosity at several shear rates (e.g. with a minimum of 3), solids content, pH, oxygen and/or gaseous content, particle size distribution, and conductivity etc. during the production process and at the output of the production process. As mentioned, system 100 includes the direction valve 116 coupled to the controller 302 for bi- or unidirectional signal transmission, where an output product is disposed on the end of the supply line 104 which is coupled to the plurality of outlets 106. The direction valve 116 directs the flow of the paste to one outlet of the plurality of outlets 106 steered by the signals received from the controller 302 and the signal generator 3021, wherein the signal generation is based on the quality of the paste determined by the measuring data, which the controller 302 receives from the bypass line 202 measuring devices or other measuring devices/sensors monitoring the process. The signal generator 3021can e.g. continuously monitor the generated signals steering the direction valve 116, thereby providing a rewind and forward functionality of the monitored historical signals for an operator. The outlets 106 can include at least a first outlet 106A connected to production tank where, for example, the paste is fed later to a next production step, a second outlet 106B connected to a rework tank (as this product can e.g. be fed back to mixing process), and a third outlet 106C connected to a waste tank 122, the waste having low quality slurry. The second outlet 106B and the third outlet 106C may be combined to form a single outlet. There can be also different first outlets 106A, producing different qualities within different parameter ranges usable for different applications. The sensory data of the sensors 214, 220, 226 etc. can e.g. be captured by a trigger unit 3023, wherein different sections, as e.g. rework section, waste section or set or product section are triggered dependent on the measured sensory values., which sections are pre-definable, for example in a monitoring unit 3024.

It is to be noted, that the inventive interaction of the controller 302 in connection with the direction valve 116 and the various outlets 106 does not depend on the realization of the bypass line 202 according to the invention, but can be realized with other measuring devices able to measure rheological properties of a product that, for example, relate to stress and strain rate tensors under different flow conditions, such as oscillatory shear or extensional flow. Thus, the product characteristics and other rheological properties can e.g. also be measured using devices or rheometers different from the bypass line 202, without having a direct impact on the inventive process steering and signaling of the controller 302 in connection with the direction valve 116 and the various outlets 106.

The inventive method based on the interaction of the controller 302 in connection with the direction valve 116 and the various outlets 106 allow a continuously monitoring, steering, and signaling of the product characteristics within the production cycle providing an output with in an exact and predefined parameter and characteristics range. This cannot be achieved by the prior art devices, which typically allow only a batch control or a manual control of the output product. Output products having parameters with a precise and predictable parameter range are important for many applications, as described in the following. In particular, as explained above, non-aqueous secondary batteries (also referred to as "secondary batteries"), such as lithium ion secondary batteries, are important components for many technical applications today, since they have characteristics such as compact size, light weight, high energy density, and the ability to be repeatedly charged and discharged, and, thus, are used in a wide variety of applications, in particular to challenge the energy transmission to achieve the global sustainability goals. As also already explained, a secondary battery generally includes battery members such as a positive electrode, a negative electrode, and a separator that isolates the positive electrode and the negative electrode from one another and prevents short-circuiting between the positive and negative electrodes. In particular, battery members including a porous membrane layer with the aim of improving heat resistance and strength, an adhesive layer with the aim of improving adhesiveness between battery members, or the like are used in secondary batteries. Specifically, electrodes that further include an adhesive layer formed on an electrode substrate in which an electrode mixed material layer is provided on a current collector and separators that include an adhesive layer formed on a separator substrate have been used as battery members. An adhesive layer such as mentioned above is typically formed by supplying, onto a suitable substrate such as an electrode substrate or a separator substrate, a composition for a non-aqueous secondary battery adhesive layer that is in the form of a slurry containing a binder component and a dispersion medium such as water, and then drying the composition for an adhesive layer. In summary, the coating material or paste and their characteristics play an important role in the production of non-aqueous secondary batteries.

Typically, the coating material can e.g. be prepared by dispersing a filler, such as a metal oxide, and a binder resin in a solvent, and the coating material thus prepared is applied to a separator or an electrode. Such coating materials often have problems such as showing a viscosity different to the optimal range needed to achieve an optimal coating. Another problem occurring is improper production of the coating process, which can yield in sedimentation of a filler, for example, already in the storage tank during a production process, or even in cases where the coating material remains in a pipe for a long time, the sedimentation of the filler may occur. This sedimentation has been a serious problem in the production and application of coating of batteries, however, the problem of sedimentation can be significantly improved by having a precisely controllable production process within a controllable shear rate and viscosity, and the possibility to triage the output of a coating material production process by its characteristics, such as viscosity, to achieve coating material within only the desired parameter range, as can be achieved by the inventive controller 302.

To illustrate the technical importance of the inventive continuously controlled production process and automated quality based triage, an example is provided in the following, where the controlling of the shear rate in relation to the viscosity is important. For example, in a case where a coating material has (i) a high viscosity at a low shear rate which e.g. assumes a storing step and (ii) a low viscosity at a high shear rate which e.g. assumes a solution sending step and a coating step, it is possible to solve the above-mentioned problems and thus possible to attain the object by having a controlled production with an output paste or coating material within a precise parameter value range. In particular, such a coating material within a defined range can e.g. have the following properties and application: (A) A nonaqueous electrolyte secondary battery coating material for forming a porous layer by applying the nonaqueous electrolyte secondary battery coating material to an electrode or a porous base material of a nonaqueous electrolyte secondary battery. The nonaqueous electrolyte secondary battery coating material can e.g. include: a binder resin, a filler; and a solvent. The nonaqueous electrolyte secondary battery coating material can e.g. have (i) a first thixotropic index of not less than 4 and not more than 400, the first thixotropic index being obtained by dividing a viscosity of the non-aqueous electrolyte secondary battery coating material at a shear rate of 0.1 s$^{-1}$ by a viscosity of the nonaqueous electrolyte secondary battery coating material at a shear rate of 100 s$^{-1}$ and (ii) a second thixotropic index of not less than 5 and not more than 40'000, the second thixotropic index being obtained by dividing the viscosity of the non-aqueous electrolyte secondary battery coating material at the shear rate of 0.1 s$^{-1}$ by a viscosity of the nonaqueous electrolyte secondary battery coating material at a shear rate of 10'000 s$^{-1}$; (B) The nonaqueous electrolyte secondary battery coating material as set forth in (A) above, wherein the filler has a terminal velocity Vs of not more than 13 mm/sec, the terminal velocity Vs can e.g. be obtained from the following relationship:

$$V_s = \frac{D_{90}(\rho_{filter} - \rho_{solvent}) \times g}{18 \times \eta(0.1s^{-1})}$$

with $D_{90}$ represents a particle diameter at which, in a case where volumes of particles constituting the filler are summed up in ascending order of particle diameters, a sum of the volumes reaches 90% of a total volume of the particles; $\rho_{filter}$ represents a density of the filler; $\rho_{solvent}$ represents a density of the solvent; g represents gravitational acceleration; and $\eta_{(0.1s-1)}$ represents the viscosity of the nonaqueous electrolyte secondary battery coating material at the shear rate of 0.1 s$^{-1}$ which viscosity is measured, e.g. using the present inventive bypass measuring system or a rheometer.

With the inventive measuring and/or steering/controlling system 100, it is possible to produce and/or technically realize a coating material having characteristics within a precisely defined parameter range which is excellent in storage properties, solution sending properties, and coating properties, for example, by controlling thixotropy and/or shear thinning of the coating material, as measuring parameters or time series of measuring values measuring dynamic behavior. In this application, stability of a coating material in a state where the coating material is stored are referred to as a storage properties. Solution sending properties are measuring the ease of sending the coating material through a pipe and the like, and coating properties quantify the ease of handling the coating material in a case where the coating material is applied to an electrode or a porous base material (handling easiness).

For example, the inventive system is able to capture thixotropy, taken as an example here, allowing to measure and control products in which a viscosity becomes lower as a shear rate becomes higher, or shear thinning where for the non-Newtonian behavior of the product its viscosity decreases under shear strain. Typically, the viscosity, i.e. the gradual deformation by shear or tensile stresses, of non-Newtonian fluids depends on the shear rate or shear rate history. Some non-Newtonian fluids with shear-independent viscosity, however, still exhibit normal stress-differences or other non-Newtonian behavior. In a Newtonian fluid, the relation between the shear stress and the shear rate is linear, passing through the origin, the constant of proportionality being the coefficient of viscosity. In a non-Newtonian fluid, the relation between the shear stress and the shear rate is different. The fluid can even exhibit time-dependent viscosity. Therefore, a constant coefficient of viscosity cannot be defined. Thus, although viscosity measurements can be used to characterize the shear properties of a fluid, it has to be noted that it can be inadequate to measure some non-Newtonian fluids. For these cases, the measuring parameters used by the control and signaling system can be accomplished or replaced by measuring one or more other rheological properties that relate stress and strain rate tensors under many different flow conditions, such as oscillatory shear or extensional flow. These other rheological properties can e.g. be measured using different devices or rheometers known in the prior art.

Coming back to the example of thixotropy, the thixotropic index can be measured as the ratio of the viscosity of a material at two different shear rates (low-shear viscosity/high-shear viscosity), where the low-shear rate and high-shear rate can e.g. be chosen to be different by a factor of 10, or the like. Thus, in rheology, thixotropy allows to measure time dependences of the flow properties of non-Newtonian fluids in which the viscosity decreases as a result of continuous external influences and only returns to the initial viscosity after the stress has ended. In other words, this means that the thixotropic fluid becomes thinner with the duration of its deformation. Thixotropy is exhibited by a system having a structure in which the system breaks down depending on a shear rate in a case where the system is deformed by being sheared. Such structures can e.g. be seen in cases where media moderately interact with each other in a certain kind of polymer solution or in systems in which a certain kind of filler is dispersed. Thixotropy is also a phenomenon in which shear stress is reduced depending on time. Therefore, it is known that a system having thixotropy generally exhibits hysteresis behavior, that is, varies in viscosity between (i) a case where a shear rate is increased from a state where the system is allowed to stand still for a long time and (ii) a case where the shear rate is reduced from a state where the system is sheared. A viscosity attained in a case where a shear rate is increased is higher than that attained in a case where the shear rate is reduced. Thus, in the production process of coating material and/or the output material of the production process, it can be essential, to control and/or hold and/or have the product characteristics within a precise range or section. As mentioned above, as measure indicative of thixotropy, the thixotropic index measure can be used. A thixotropic index value is a value obtained by dividing a viscosity at a low shear rate by a viscosity at a high shear rate. In a case where a material has a thixotropic index value of more than 1, it can be said that such a material or product has thixotropy.

A coating material which has high thixotropy has a high viscosity at a low shear rate (that is, a viscosity of the coating material, which viscosity assumes a storing step, is high). This can cause sedimentation of a filler to be suppressed, and can cause an improvement in storage property. On the other hand, the coating material has a low viscosity at a high shear rate (that is, a viscosity of the coating material, which viscosity assumes a solution sending step and a coating step, is low). This causes the coating material to be easily sent. Furthermore, this causes the coating material to have a good leveling property in the coating step, and ultimately causes the coating material to have such good handling easiness that, for example, an electrode or a porous base material can be coated with the coating material having a uniform thickness. Accordingly, a coating material which has moderately high thixotropy can have a good storage property, a good solution sending property, and a good coating property. In order for a coating material to have both a good storage property and a good solution sending property, a thixotropic index of the coating material which thixotropic index is obtained by dividing a viscosity of the coating material at a shear rate of $0.1 \text{ s}^{-1}$ by a viscosity of the coating material at a shear rate of $100 \text{ s}^{-1}$ can be, e.g. chosen to be not less than 4 and not more than 400, or preferably not less than 5 and not more than 300. The coating material which has a thixotropic index falling within the above range has a sufficient viscosity in the storing step, and has such a low viscosity in the solution sending step that the coating material can be easily sent. For the coating material to have both the good storage property and a good coating property, a thixotropic index of the coating material which thixotropic index is obtained by dividing the viscosity of the coating material at the shear rate of $0.1 \text{ s}^{-1}$ by a viscosity of the coating material at a shear rate of $10'000 \text{ s}^{-1}$ can e.g. be chosen to be not less than 5 and not more than 40'000, more preferably not less than 10 and not more than 30'000. The coating material which has a thixotropic index falling within the above range has a sufficient viscosity in the storing step, and has such a low viscosity in the coating step that the coating material is good in handling easiness. Regarding the storage properties, the viscosity at the shear rate of $0.1 \text{ s}^{-1}$ can e.g. be chosen to be not less than 0.5 Pa·s, or preferably not less than 5 Pa·s, or not less than 10 Pa·s. Regarding the ease of sending the coating material, the viscosity at the shear rate of $100 \text{ s}^{-1}$ can e.g. be chosen not to be more than 2 Pa·s, preferably not more than 1.5 Pa·s. Regarding the difficulty of causing sedimentation of a filler, the viscosity at the shear rate of $100 \text{ s}^{-1}$ can e.g. be chosen to be not less than 0.05 Pa·s, more preferably not less than 0.1 Pa· s. Regarding the handling easiness of the coating material in the coating step, the viscosity at the shear rate of $10,000 \text{s}^{-1}$ can e.g. be chosen to be not more than 0.15 Pa· s, or not more than 0.1 Pa·s. In this case, a lower limit of the viscosity at the shear rate of $10,000 \text{ s}^{-1}$ can e.g. not limited, but can be, for example, not less than 0.01 Pa·s.

**Claims**

1. An inline control and measuring system connected to a continuous mixing process of a system (100) comprising an extruder (102) for mixing solid or viscous materials with liquids and/or solvents to form the paste or viscous materials, wherein the paste or viscous material is discharged through a supply line (104) and at least one outlet of a plurality of outlets (106), **characterized**

   **in that** the system (100) comprises a bypass line (202) branching from the supply line (104) for receiving a volume of the paste from the supply line (104), wherein the bypass line (202) comprises a plurality of pipes (212) and a plurality of sensors (214),
   **in that** the system (100) comprises a controller (302) in communication with the extruder (102) and/or the plurality of sensors (214) in the bypass line (202), wherein the controller (302) (i) receives signals of at least one of the plurality of the sensors (214) in the bypass line (202), (ii) determines product properties of the paste based on at least the sensor measurements of the sensors (214) in the bypass line (202), (iii) discharges the paste through the at least one outlet of the plurality of outlets (106) based on the determined product properties, and (iv) controls the extruder (102) and/or the pressure valve (112), when the determined product properties of the paste are different from target product properties, and
**in that** the plurality of outlets (106) comprises a first outlet (106A) communicated with a production line (120), wherein the first quality paste is discharged through the first outlet (106A) by being fed to a next production step, a second outlet (106B) communicated with the extruder (102), wherein the second quality paste is discharged through the second outlet (106B) by being fed back to the continuous mixing process via the extruder (102), and a third outlet (106C) communicated with a waste tank (122), wherein the third quality paste is discharged through the third outlet (106C) and collected in the waste tank (122).

2. A system (100) for producing paste or viscous material for industrial application, the system (100) comprising the inline control and measuring system according to claim 1 and being connected to a continuous mixing process of the system (100) and an extruder (102) for mixing solid or viscous materials with liquids and/or solvents to form the paste.

3. The system (100) according to claim 2, **characterized in that** the system (100) comprises a pump (210) coupled to the supply line (104) at downstream end of a flow meter (110), wherein the pump (210) receives and discharges the volume of the paste through the bypass line (202).

4. The system (100) according to one of claims 2 to 3, **characterized in that** the plurality of pressure sensors (214) comprises a first pressure sensor (214A) disposed at downstream end of the pump (210), a second pressure sensor (214B) disposed at a first distance (D1) from the first pressure sensor (214A), a third pressure sensor (214C) disposed at a second distance (D2) from the second pressure sensor (214B), and a fourth pressure sensor (214D) disposed at a third distance (D3) from the third pressure sensor (214C).

5. The system (100) according to one of claims 2 to 4, **characterized in that** the system (100) comprises a flow sensor (220) disposed on the first pipe (212A) between the first pressure sensor (214A) and the second pressure sensor (214B) for generating signals indicative of mass flow rate and/or volume flow rate and/or density of the paste flowing through the bypass line (202).

6. The system (100) according to claim 5, **characterized in that** the first pipe (212A) is the pipe within the flow sensor.

7. The system (100) according to one of claims 2 to 6, **characterized in that** the controller (302) receives the flow rate of the paste flowing through the bypass line (202), and regulates the pump (210), when actual flow rate of the paste is different from a target flow rate.

8. The system (100) according to one of claims 2 to 7, **characterized in that** the system (100) comprises a metering device (222) disposed on the bypass line (202) for measuring pH and electrical conductivity of the paste.

9. The system (100) according to one of claims 2 to 8, **characterized in that** the system (100) comprises a solid-state sensor (226) disposed on the bypass line (202) for measuring solid contents in the paste.

10. The system (100) according to one of claims 2 to 9, **characterized in that** the system (100) comprises a pressure sensing device (206) disposed at a junction (JO) at which the bypass line (202) branches from the supply line (104) for generating signals indicative of pressure of the paste flowing through the supply line (104).

11. The system (100) according to one of claims 2 to 10, **characterized in that** the system (100) comprises a gas sensing device (114) disposed on the supply line (104) for generating signals indicative of gaseous content in the paste.

12. The system (100) according to claims 11, **characterized in that** the signals indicative of gaseous content in the paste are signals indicative of oxygen content in the paste

13. The system (100) according to one of claims 2 to 12, **characterized in that** the controller (302) identifies the paste as a first quality paste when the determined viscosity of the paste is equal to the target viscosity range, a second quality paste when the determined viscosity of the paste is different from the target viscosity range and equal to a predefined viscosity range, or a third quality paste when the determined viscosity of the paste is different from the target viscosity range corresponding to the first quality paste and the predefined viscosity range corresponding to the second quality paste.

14. The system (100) according to one of claims 1 to 13, **characterized in that** the system (100) further comprises a pressure valve (112) disposed on the supply line (104) for controlling a pressure at which the paste is discharged through the supply line (104).

15. The system (100) according to one of claims 1 to 14, **characterized in that** the system (100) comprising a flow meter (110) disposed on the supply line (104) for measuring rate of flow of the paste through the supply line (104).

16. A method (600) for producing a paste for an industrial application using a system (100), wherein the system (100) comprises an extruder (102) for mixing solid materials with liquids and/or solvents to form the paste or viscous materials, wherein the paste or viscous material is discharged through a supply line (104) and at least one outlet of a plurality of outlets (106), **characterized in** the steps of,

   receiving a volume of the paste from the supply line (104) using a bypass line (202) branching from the supply line (104), wherein the bypass line (202) comprises a plurality of pipes (212) and a plurality of sensors (214), communicating signals between a controller (302) and the extruder (102) and/or the plurality of sensors (214) in the bypass line (202), wherein the controller (302) (i) receives signals of at least one of the plurality of the sensors (214) in the bypass line (202), (ii) determines product properties of the paste based on at least the sensor measurements of the sensors (214) in the bypass line (202), (iii) discharges the paste through the at least one outlet of the plurality of outlets (106) based on the determined product properties, and (iv) controls the extruder (102) and/or the pressure valve (112), when the determined product properties of the paste are different from target product properties, and discharging the first quality paste through a first outlet (106A) of the plurality of outlets (106) being fed to a next production step, the first outlet (106A) communicating with a production line (120), discharging the second quality paste through a second outlet (106B) of the plurality of outlets (106) being fed back to the continuous mixing process via the extruder (102), discharging the third quality paste through a third outlet (106C), the third outlet (106C) communicating with a waste tank (122), and collecting the third quality paste in the waste tank (122).

17. The method (600) according to claim 16, **characterized in that** the method comprises identifying the paste using the controller (302) as a first quality paste when the determined and/or measured viscosity and/or density and/or solid content and/or oxygen content and/or pH and/or conductivity of the paste is equal to the target viscosity and/or density and/or solid content and/or oxygen content and/or pH and/or conductivity range, wherein the first quality paste is discharged through a first outlet (106A) of the plurality of outlets (106) communicated with a production line (120), a second quality paste when the determined viscosity and/or density and/or solid content and/or oxygen content and/or pH and/or conductivity of the paste is different from the target viscosity and/or density and/or solid content and/or oxygen content and/or pH and/or conductivity range and equal to a predefined viscosity and/or density and/or solid content and/or oxygen content and/or pH and/or conductivity range, wherein the second quality paste is discharged through a second outlet (106B) of the plurality of outlets (160) communicated with the extruder (102), or a third quality paste when the determined viscosity and/or density and/or solid content and/or oxygen content and/or pH and/or conductivity of the paste is different from the target viscosity and/or density and/or solid content and/or oxygen content and/or pH and/or conductivity range corresponding to the first quality paste and the predefined viscosity and/or density and/or solid content and/or oxygen content and/or pH and/or conductivity range corresponding to the second quality paste, wherein the third quality paste is discharged through a third outlet (106C) of the plurality of outlets (106) communicated with a tank (120).

18. The method (600) according to claim 17, **characterized in that** the target viscosity and/or density and/or solid content and/or oxygen content and/or pH and/or conductivity range of the first quality paste is a production range, the predefined viscosity and/or density and/or solid content and/or oxygen content and/or pH and/or conductivity range of the second quality paste is a rework range and/or feedback range, and the range outside the target viscosity and/or density and/or solid content and/or oxygen content and/or pH and/or conductivity range and the predefined viscosity and/or density and/or solid content and/or oxygen content and/or pH and/or conductivity range is a waste range.

19. The method (600) according to one of the claims 16 to 18, **characterized in that** the system (100) further comprises a pressure valve (112) disposed on the supply line (104) for controlling a pressure at which the paste is discharged through the supply line (104).

**Patentansprüche**

1. Inline-Steuer- und Messsystem, das mit einem kontinuierlichen Mischprozess eines Systems (100) verbunden ist, umfassend einen Extruder (102) zum Mischen fester oder viskoser Materialien mit Flüssigkeiten und/oder Lösungsmitteln, um die Paste oder die viskosen Materialien zu bilden, wobei die Paste oder das viskose Material durch eine Zufuhrleitung (104) und mindestens einen Auslass von einer Vielzahl von Auslässen (106) ausgegeben wird, **dadurch gekennzeichnet**

   **dass** das System (100) eine Bypass-Leitung (202) umfasst, die von der Zufuhrleitung (104) abzweigt, um ein Volumen der Paste aus der Zufuhrleitung (104) aufzunehmen, wobei die Bypass-Leitung (202) eine Vielzahl von Rohren (212) und eine Vielzahl von Sensoren (214) umfasst,

   **dass** das System (100) eine Steuerung (302) in Verbindung mit dem Extruder (102) und/oder der Vielzahl von Sensoren (214) in der Bypass-Leitung (202) umfasst, wobei die Steuerung (302) (i) Signale von mindestens einem der Vielzahl der Sensoren (214) in der Bypass-Leitung (202) empfängt, (ii) Produkteigenschaften der Paste basierend auf mindestens den Sensormessungen der Sensoren (214) in der Bypass-Leitung (202) bestimmt, (iii) die Paste durch den mindestens einen Auslass der Vielzahl von Auslässen (106) basierend auf den bestimmten Produkteigenschaften ausgibt, und (iv) den Extruder (102) und/oder das Druckventil (112) steuert, wenn sich die bestimmten Produkteigenschaften der Paste von den Soll-Produkteigenschaften unterscheiden, und

   **dass** die Vielzahl von Auslässen (106) einen ersten Auslass (106A), der mit einer Produktionslinie (120) in Verbindung ist, wobei die Paste erster Qualität durch den ersten Auslass (106A) ausgegeben wird, indem sie in einen nächsten Produktionsschritt eingespeist wird, einen zweiten Auslass (106B), der mit dem Extruder (102) in Verbindung ist, wobei die Paste zweiter Qualität durch den zweiten Auslass (106B) ausgegeben wird, indem sie über den Extruder (102) zurück in den kontinuierlichen Mischprozess gespeist wird, und einen dritten Auslass (106C), der mit einem Abfallbehälter (122) in Verbindung ist, wobei die Paste dritter Qualität durch den dritten Auslass (106C) ausgegeben und in dem Abfallbehälter (122) gesammelt wird, umfasst.

2. System (100) zum Herstellen von Paste oder viskosem Material zur industriellen Anwendung, das System (100) umfassend das Inline-Steuer- und Messsystem nach Anspruch 1 umfasst und verbunden mit einem kontinuierlichen Mischprozess des Systems (100) und einem Extruder (102) zum Mischen fester oder viskoser Materialien mit Flüssigkeiten und/oder Lösungsmitteln, um die Paste zu bilden.

3. System (100) nach Anspruch 2, **dadurch gekennzeichnet, dass** das System (100) eine Pumpe (210) umfasst, die an einem stromabwärtigen Ende eines Durchflussmessers (110) mit der Zufuhrleitung (104) gekoppelt ist, wobei die Pumpe (210) das Volumen der Paste aufnimmt und durch die Bypass-Leitung (202) ausgibt.

4. System (100) nach einem der Ansprüche 2 bis 3, **dadurch gekennzeichnet, dass** die Vielzahl von Drucksensoren (214) einen ersten Drucksensor (214A), der an einem stromabwärtigen Ende der Pumpe (210) angeordnet ist, einen zweiten Drucksensor (214B), der in einem ersten Abstand (D1) von dem ersten Drucksensor (214A) angeordnet ist, einen dritten Drucksensor (214C), der in einem zweiten Abstand (D2) von dem zweiten Drucksensor (214B) angeordnet ist, und einen vierten Drucksensor (214D), der in einem dritten Abstand (D3) von dem dritten Drucksensor (214C) angeordnet ist, umfasst.

5. System (100) nach einem der Ansprüche 2 bis 4, **dadurch gekennzeichnet, dass** das System (100) einen Durchflusssensor (220) umfasst, der zwischen dem ersten Drucksensor (214A) und dem zweiten Drucksensor (214B) an dem ersten Rohr (212A) angeordnet ist, um Signale zu erzeugen, die indikativ für eine Massendurchflussmenge und/oder eine Volumendurchflussmenge und/oder Dichte der Paste ist, die durch die Bypass-Leitung (202) fließt.

6. System (100) nach Anspruch 5, **dadurch gekennzeichnet, dass** das erste Rohr (212A) das Rohr innerhalb des Durchflusssensors ist.

7. System (100) nach einem der Ansprüche 2 bis 6, **dadurch gekennzeichnet, dass** die Steuerung (302) die Durchflussmenge der Paste empfängt, die durch die Bypass-Leitung (202) fließt, und die Pumpe (210) regelt, wenn sich die Ist-Durchflussmenge der Paste von einer Soll-Durchflussmenge unterscheidet.

8. System (100) nach einem der Ansprüche 2 bis 7, **dadurch gekennzeichnet, dass** das System (100) eine Dosiervorrichtung (222) umfasst, die an der Bypass-Leitung (202) angeordnet ist, um pH und elektrische Leitfähigkeit der Paste zu messen.

9. System (100) nach einem der Ansprüche 2 bis 8, **dadurch gekennzeichnet, dass** das System (100) einen Festkörpersensor (226) umfasst, der an der Bypass-Leitung (202) angeordnet ist, um einen Feststoffgehalt in der Paste zu messen.

10. System (100) nach einem der Ansprüche 2 bis 9, **dadurch gekennzeichnet, dass** das System (100) eine Druckerfassungsvorrichtung (206) umfasst, die an einer Abzweigstelle (J0) angeordnet ist, an der die Bypass-Leitung (202) von der Zufuhrleitung (104) abzweigt, um Signale zu erzeugen, die indikativ für Druck der Paste sind, die durch die Zufuhrleitung (104) fließt.

11. System (100) nach einem der Ansprüche 2 bis 10, **dadurch gekennzeichnet, dass** das System (100) eine Gaserfassungsvorrichtung (114) umfasst, die an der Zufuhrleitung (104) angeordnet ist, um Signale zu erzeugen, die indikativ für gasförmigen Gehalt in der Paste sind.

12. System (100) nach Anspruch 11, **dadurch gekennzeichnet, dass** die Signale, die indikativ für gasförmigen Gehalt in der Paste sind, Signale sind, die indikativ für Sauerstoffgehalt in der Paste sind.

13. System (100) nach einem der Ansprüche 2 bis 12, **dadurch gekennzeichnet, dass** die Steuerung (302) die Paste als Paste erster Qualität identifiziert, wenn die bestimmte Viskosität der Paste gleich wie der Soll-Viskositätsbereich ist, als Paste zweiter Qualität, wenn sich die bestimmte Viskosität der Paste von dem Soll-Viskositätsbereich unterscheidet und gleich wie ein vordefinierten Viskositätsbereich ist, oder als Paste dritter Qualität, wenn sich die bestimmte Viskosität der Paste von dem Soll-Viskositätsbereich, der der Paste erster Qualität entspricht, und dem vordefinierten Viskositätsbereich, der der Paste zweiter Qualität entspricht, unterscheidet.

14. System (100) nach einem der Ansprüche 1 bis 13, **dadurch gekennzeichnet, dass** das System (100) ferner ein Druckventil (112) umfasst, das an der Zufuhrleitung (104) angeordnet ist, um einen Druck zu steuern, mit dem die Paste durch die Zufuhrleitung (104) ausgegeben wird.

15. System (100) nach einem der Ansprüche 1 bis 14, **dadurch gekennzeichnet, dass** das System (100) einen Durchflussmesser (110) umfasst, der an der Zufuhrleitung (104) angeordnet ist, um eine Fließgeschwindigkeit der Paste durch die Zufuhrleitung (104) zu messen.

16. Verfahren (600) zum Herstellen einer Paste für eine industrielle Anwendung unter Verwendung eines Systems (100), wobei das System (100) einen Extruder (102) zum Mischen fester Materialien mit Flüssigkeiten und/oder Lösungsmitteln umfasst, um die Paste oder die viskosen Materialien zu bilden, wobei die Paste oder das viskose Material durch eine Zufuhrleitung (104) und mindestens einen Auslass von einer Vielzahl von Auslässen (106) ausgegeben wird, **gekennzeichnet durch** die folgenden Schritte,

Empfangen eines Volumens der Paste von der Zufuhrleitung (104) unter Verwendung einer Bypass-Leitung (202), die von der Zufuhrleitung (104) abzweigt, wobei die Bypass-Leitung (202) eine Vielzahl von Rohren (212) und eine Vielzahl von Sensoren (214) umfasst,

Übermitteln von Signalen zwischen einer Steuerung (302) und dem Extruder (102) und/oder der Vielzahl von Sensoren (214) in der Bypass-Leitung (202), wobei die Steuerung (302) (i) Signale von mindestens einem der Vielzahl der Sensoren (214) in der Bypass-Leitung (202) empfängt, (ii) Produkteigenschaften der Paste basierend auf mindestens den Sensormessungen der Sensoren (214) in der Bypass-Leitung (202) bestimmt, (iii) die Paste **durch** den mindestens einen Auslass von der Vielzahl von Auslässen (106) basierend auf den bestimmten Produkteigenschaften ausgibt, und (iv) den Extruder (102) und/oder das Druckventil (112) steuert, wenn sich die bestimmten Produkteigenschaften der Paste von den Soll-Produkteigenschaften unterscheiden, und

Ausgeben der Paste erster Qualität **durch** einen ersten Auslass (106A) der Vielzahl von Auslässen (106), die in einen nächsten Produktionsschritt eingespeist wird, wobei der erste Auslass (106A) in Verbindung mit einer Produktionslinie (120) ist, Ausgeben der Paste zweiter Qualität **durch** einen zweiten Auslass (106B) der Vielzahl von Auslässen (106), der über den Extruder (102) zurück in den kontinuierlichen Mischprozess gespeist wird, Ausgeben der Paste dritter Qualität **durch** einen dritten Auslass (106C), wobei der dritte Auslass (106C) mit einem Abfalltank (122) in Verbindung ist, und Sammeln der Paste dritter Qualität in dem Abfalltank (122).

17. Verfahren (600) nach Anspruch 16, **dadurch gekennzeichnet, dass** das Verfahren ein Identifizieren der Paste unter Verwendung der Steuerung (302) als eine Paste erster Qualität umfasst, wenn die bestimmte und/oder gemessene Viskosität und/oder Dichte und/oder der Feststoffgehalt und/oder der Sauerstoffgehalt und/oder der pH und/oder die Leitfähigkeit der Paste gleich ist wie der Soll-Viskositäts und/oder -Dichte- und/oder -Feststoffgehalt- und/oder -Sauerstoffgehalt- und/oder -pH- und/oder -Leitfähigkeitsbereich ist, wobei die Paste erster Qualität durch einen ersten Auslass (106A) der Vielzahl von Auslässen (106), die mit einer Produktionslinie (120) in Verbindung sind, eine Paste zweiter Qualität, wenn sich die bestimmte Viskosität und/oder Dichte und/oder der bestimmte Feststoffgehalt und/oder Sauerstoffgehalt und/oder pH und/oder die bestimmte Leitfähigkeit der Paste von dem Soll-Viskositäts- und/oder -Dichte- und/oder -Feststoffgehalt- und/oder -Sauerstoffgehalt- und/oder -pH- und/oder -Leitfähigkeitsbereich unterscheidet und gleich ist wie ein vordefinierter Viskositäts- und/oder Dichte- und/oder Feststoffgehalt- und/oder Sauerstoffgehalt- und/oder pH- und/oder -Leitfähigkeitsbereich, wobei die Paste zweiter Qualitätspaste durch einen zweiten Auslass (106B) der Vielzahl von Auslässen (160), die mit dem Extruder (102) in Verbindung stehen, ausgegeben wird, oder eine Paste dritter Qualität, wenn sich die bestimmte Viskosität und/oder Dichte und/oder der bestimmte Feststoffgehalt und/oder Sauerstoffgehalt und/oder pH und/oder die bestimmte Leitfähigkeit der Paste von dem Soll-Viskositäts- und/oder -Dichte- und/oder -Feststoffgehalt- und/oder - Sauerstoffgehalt- und/oder -pH- und/oder -Leitfähigkeitsbereich, der der Paste erster Qualität entspricht, und dem vordefinierten Viskositäts- und/oder Dichte- und/oder Feststoffgehalt- und/oder Sauerstoffgehalt- und/oder pH- und/oder - Leitfähigkeitsbereich, unterscheidet, wobei die Paste dritter Qualität durch einen dritten Auslass (106C) der Vielzahl von Auslässen (106), die mit dem Extruder (120) in Verbindung sind, ausgegeben wird,

**18.** Verfahren (600) nach Anspruch 17, **dadurch gekennzeichnet, dass** der Soll-Viskositäts- und/oder -Dichte- und/oder -Feststoffgehalt- und/oder -Sauerstoffgehalt- und/oder -pH- und/oder -Leitfähigkeitsbereich der Paste erster Qualität ein Produktionsbereich ist, der vordefinierte Viskositäts- und/oder Dichte- und/oder Feststoffgehalt- und/oder Sauerstoffgehalt- und/oder pH- und/oder Leitfähigkeitsbereich der Paste zweiter Qualität ein Nacharbeits- und/oder Rückführungsbereich ist und der Bereich außerhalb des Soll-Viskositäts- und/oder -Dichte- und/oder -Feststoffgehalt- und/oder -Sauerstoffgehalt- und/oder -pH- und/oder -Leitfähigkeitsbereichs und des vordefinierten Viskositäts- und/oder Dichte- und/oder Feststoffgehalt- und/oder Sauerstoffgehalt- und/oder pH- und/oder Leitfähigkeitsbereichs ein Abfallbereich ist.

**19.** Verfahren (600) nach einem der Ansprüche 16 bis 18, **dadurch gekennzeichnet, dass** das System (100) ferner ein Druckventil (112) umfasst, das an der Zufuhrleitung (104) angeordnet ist, um einen Druck zu steuern, mit dem die Paste durch die Zufuhrleitung (104) ausgegeben wird.

**Revendications**

**1.** Système de commande et de mesure en ligne relié à un processus de mélangeage continu d'un système (100) comprenant une extrudeuse (102) pour mélanger des matières solides ou visqueuses avec des liquides et/ou des solvants pour former une pâte ou des matières visqueuses, dans lequel la pâte ou matière visqueuse est évacuée à travers une conduite d'alimentation (104) et au moins une sortie d'une pluralité de sorties (106), **caractérisé**

en ce que le système (100) comprend une conduite de dérivation (202) se ramifiant depuis la conduite d'alimentation (104) pour recevoir un volume de la pâte à partir de la conduite d'alimentation (104), dans lequel la conduite de dérivation (202) comprend une pluralité de tuyaux (212) et une pluralité de capteurs (214),
en ce que le système (100) comprend une unité de commande (302) en communication avec l'extrudeuse (102) et/ou la pluralité de capteurs (214) dans la conduite de dérivation (202), dans lequel l'unité de commande (302) (i) reçoit des signaux d'au moins un de la pluralité des capteurs (214) dans la conduite de dérivation (202), (ii) détermine des propriétés de produit de la pâte sur la base au moins des mesures de capteur des capteurs (214) dans la conduite de dérivation (202), (iii) évacue la pâte à travers l'au moins une sortie de la pluralité de sorties (106) sur la base des propriétés de produit déterminées, et (iv) commande l'extrudeuse (102) et/ou la soupape de pression (112), lorsque les propriétés de produit déterminées de la pâte sont différentes de propriétés de produit cibles, et
en ce que la pluralité de sorties (106) comprend une première sortie (106A) mise en communication avec une chaîne de production (120), dans lequel la pâte de première qualité est évacuée à travers la première sortie (106A) en étant fournie à une étape de production suivante, une deuxième sortie (106B) mise en communication avec l'extrudeuse (102), dans lequel la pâte de deuxième qualité est évacuée à travers la deuxième sortie (106B) en étant fournie en retour au processus de mélangeage continu par l'intermédiaire de l'extrudeuse (102), et une troisième sortie (106C) mise en communication avec un réservoir de rebut (122), dans lequel la pâte de troisième qualité est évacuée à travers la troisième sortie (106C) et accumulée dans le réservoir de rebut (122).

**2.** Système (100) pour produire une pâte ou matière visqueuse pour application industrielle, le système (100) comprenant le système de commande et de mesure en ligne selon la revendication 1 et étant relié à un processus de mélangeage continu du système (100) et une extrudeuse (102) pour mélanger des matières solides ou visqueuses avec des liquides et/ou solvants pour former la pâte.

3. Système (100) selon la revendication 2, **caractérisé en ce que** le système (100) comprend une pompe (210) couplée à la conduite d'alimentation (104) à une extrémité aval d'un débitmètre (110), dans lequel la pompe (210) reçoit et évacue le volume de la pâte à travers la conduite de dérivation (202).

4. Système (100) selon l'une des revendications 2 et 3, **caractérisé en ce que** la pluralité de capteur de pressions (214) comprend un premier capteur de pression (214A) disposé à une extrémité aval de la pompe (210), un deuxième capteur de pression (214B) disposé à une première distance (D1) du premier capteur de pression (214A), un troisième capteur de pression (214C) disposé à une deuxième distance (D2) du deuxième capteur de pression (214B), et un quatrième capteur de pression (214D) disposé à une troisième distance (D3) du troisième capteur de pression (214C).

5. Système (100) selon l'une des revendications 2 à 4, **caractérisé en ce que** le système (100) comprend un capteur de débit (220) disposé sur le premier tuyau (212A) entre le premier capteur de pression (214A) et le deuxième capteur de pression (214B) pour générer des signaux indicatifs de débit massique et/ou de débit volumique et/ou de densité de la pâte s'écoulant à travers la conduite de dérivation (202).

6. Système (100) selon la revendication 5, **caractérisé en ce que** le premier tuyau (212A) est le tuyau à l'intérieur du capteur de débit.

7. Système (100) selon l'une des revendications 2 à 6, **caractérisé en ce que** l'unité de commande (302) reçoit le débit de la pâte s'écoulant à travers la conduite de dérivation (202), et régule la pompe (210), lorsqu'un débit réel de la pâte est différent d'un débit cible.

8. Système (100) selon l'une des revendications 2 à 7, **caractérisé en ce que** le système (100) comprend un dispositif de mesurage (222) disposé sur la conduite de dérivation (202) pour mesurer le pH et la conductivité électrique de la pâte.

9. Système (100) selon l'une des revendications 2 à 8, **caractérisé en ce que** le système (100) comprend un capteur à semi-conducteur (226) disposé sur la conduite de dérivation (202) pour mesurer des teneurs en matières solides dans la pâte.

10. Système (100) selon l'une des revendications 2 à 9, **caractérisé en ce que** le système (100) comprend un dispositif de détection de pression (206) disposé à une jonction (J0), à laquelle la conduite de dérivation (202) se ramifie depuis la conduite d'alimentation (104), pour générer des signaux indicatifs de pression de la pâte s'écoulant à travers la conduite d'alimentation (104).

11. Système (100) selon l'une des revendications 2 à 10, **caractérisé en ce que** le système (100) comprend un dispositif de détection de gaz (114) disposé sur la conduite d'alimentation (104) pour générer des signaux indicatifs de teneur en gaz dans la pâte.

12. Système (100) selon la revendication 11, **caractérisé en ce que** les signaux indicatifs de teneur en gaz dans la pâte sont des signaux indicatifs de teneur en oxygène dans la pâte.

13. Système (100) selon l'une des revendications 2 à 12, **caractérisé en ce que** l'unité de commande (302) identifie la pâte comme étant une pâte de première qualité lorsque la viscosité déterminée de la pâte est égale à la plage de viscosité cible, une pâte de deuxième qualité lorsque la viscosité déterminée de la pâte est différente de la plage de viscosité cible et égale à une plage de viscosité prédéfinie, ou une pâte de troisième qualité lorsque la viscosité déterminée de la pâte est différente de la plage de viscosité cible correspondant à la pâte de première qualité et de la plage de viscosité prédéfinie correspondant à la pâte de deuxième qualité.

14. Système (100) selon l'une des revendications 1 à 13, **caractérisé en ce que** le système (100) comprend en outre une soupape de pression (112) disposée sur la conduite d'alimentation (104) pour commander une pression à laquelle la pâte est évacuée à travers la conduite d'alimentation (104).

15. Système (100) selon l'une des revendications 1 à 14, **caractérisé en ce que** le système (100) comprend un débitmètre (110) disposé sur la conduite d'alimentation (104) pour mesurer un débit de la pâte à travers la conduite d'alimentation (104).

16. Procédé (600) pour produire une pâte pour une application industrielle, en utilisant un système (100), dans lequel le système (100) comprend une extrudeuse (102) pour mélanger des matières solides avec des liquides et/ou des solvants pour former la pâte ou des matières visqueuses, dans lequel la pâte ou la matière visqueuse est évacuée à travers une conduite d'alimentation (104) et au moins une sortie d'une pluralité de sorties (106), **caractérisé par** les étapes de

la réception d'un volume de la pâte à partir de la conduite d'alimentation (104) en utilisant une conduite de dérivation (202) se ramifiant depuis la conduite d'alimentation (104), dans lequel la conduite de dérivation (202) comprend une pluralité de tuyaux (212) et une pluralité de capteurs (214),

la communication de signaux entre une unité de commande (302) et l'extrudeuse (102) et/ou la pluralité de capteurs (214) dans la conduite de dérivation (202), dans lequel l'unité de commande (302) (i) reçoit des signaux d'au moins un de la pluralité des capteurs (214) dans la conduite de dérivation (202), (ii) détermine des propriétés de produit de la pâte sur la base au moins des mesures de capteur des capteurs (214) dans la conduite de dérivation (202), (iii) évacue la pâte à travers l'au moins une sortie de la pluralité de sorties (106) sur la base des propriétés de produit déterminées, et (iv) commande l'extrudeuse (102) et/ou la soupape de pression (112), lorsque les propriétés de produit déterminées de la pâte sont différentes de propriétés de produit cibles, et

l'évacuation de la pâte de première qualité à travers une première sortie (106A) de la pluralité de sorties (106), fournie à une étape de production suivante, la première sortie (106A) communiquant avec une chaîne de production (120), l'évacuation de la pâte de deuxième qualité à travers une deuxième sortie (106B) de la pluralité de sorties (106), fournie en retour au processus de mélangeage continu par l'intermédiaire de l'extrudeuse (102), l'évacuation de la pâte de troisième qualité à travers une troisième sortie (106C), la troisième sortie (106C) communiquant avec un réservoir de rebut (122), et l'accumulation de la pâte de troisième qualité dans le réservoir de rebut (122).

17. Procédé (600) selon la revendication 16, **caractérisé en ce que** le procédé comprend l'identification de la pâte, en utilisant l'unité de commande (302), comme étant une pâte de première qualité lorsque la viscosité et/ou la densité et/ou la teneur en matières solides et/ou la teneur en oxygène et/ou le pH et/ou la conductivité déterminés et/ou mesurés de la pâte sont égaux à la plage cible de viscosité et/ou de densité et/ou de teneur en matières solides et/ou de teneur en oxygène et/ou de pH et/ou de conductivité, dans lequel la pâte de première qualité est évacuée à travers une première sortie (106A) de la pluralité de sorties (106) mise en communication avec une chaîne de production (120), une pâte de deuxième qualité lorsque la viscosité et/ou la densité et/ou la teneur en matières solides et/ou la teneur en oxygène et/ou le pH et/ou la conductivité déterminés de la pâte sont différents de la plage cible de viscosité et/ou de densité et/ou de teneur en matières solides et/ou de teneur en oxygène et/ou de pH et/ou de conductivité et égaux à une plage prédéfinie de viscosité et/ou de densité et/ou de teneur en matières solides et/ou de teneur en oxygène et/ou de pH et/ou de conductivité, dans lequel la pâte de deuxième qualité est évacuée à travers une deuxième sortie (106B) de la pluralité de sorties (160) mise en communication avec l'extrudeuse (102), ou une pâte de troisième qualité lorsque la viscosité et/ou la densité et/ou la teneur en matières solides et/ou la teneur en oxygène et/ou le pH et/ou la conductivité déterminés de la pâte sont différents de la plage cible de viscosité et/ou de densité et/ou de teneur en matières solides et/ou de teneur en oxygène et/ou de pH et/ou de conductivité correspondant à la pâte de première qualité et de la plage prédéfinie de viscosité et/ou de densité et/ou de teneur en matières solides et/ou de teneur en oxygène et/ou de pH et/ou de conductivité correspondant à la pâte de deuxième qualité, dans lequel la pâte de troisième qualité est évacuée à travers une troisième sortie (106C) de la pluralité de sorties (106) mise en communication avec un réservoir (120).

18. Procédé (600) selon la revendication 17, **caractérisé en ce que** la plage cible de viscosité et/ou de densité et/ou de teneur en matières solides et/ou de teneur en oxygène et/ou de pH et/ou de conductivité de la pâte de première qualité est une plage de production, la plage prédéfinie de viscosité et/ou de densité et/ou de teneur en matières solides et/ou de teneur en oxygène et/ou de pH et/ou de conductivité de la pâte de deuxième qualité est une plage de remise en fabrication et/ou plage de fourniture en retour, et la plage en dehors de la plage cible de viscosité et/ou de densité et/ou de teneur en matières solides et/ou de teneur en oxygène et/ou de pH et/ou de conductivité et de la plage prédéfinie de viscosité et/ou de densité et/ou de teneur en matières solides et/ou de teneur en oxygène et/ou de pH et/ou de conductivité est une plage de rebut.

19. Procédé (600) selon l'une des revendications 16 à 18, **caractérisé en ce que** le système (100) comprend en outre une soupape de pression (112) disposée sur la conduite d'alimentation (104) pour commander une pression à laquelle la pâte est évacuée à travers la conduite d'alimentation (104).

Fig. 1A

Extruder 102

Fig. 1B

Fig. 2

**Determine paste quality**

| Input | Output |
|---|---|
| Shear rate and shear stress | Quality of paste |
| Flow rate | |
| Conductivity | |
| pH value | |
| Solid content | |
| Gaseous content | |

**Identify paste quality**

| Input | Output |
|---|---|
| Quality of paste | First quality paste - production |
| | Second quality paste - rework |
| | Third quality paste - waste |

**Process control**

| Input | Output |
|---|---|
| Shear rate and shear stress, Flow rate, Conductivity, pH value, Solid content, Gaseous content | Liquid dosing |
| Liquid dosing | Solid dosing |
| Solid dosing | Extruder speed |
| Extruder speed | Pressure on supply line |
| | Mass flow rate on supply line |

106A 106C 106B

Direction valve 116

Production line 120

Tank 122

Controller 302

Extruder 102

504

502

→ Product flow
--→ Data flow

Fig. 3

28

Fig. 4

Fig. 5

EP 4 202 404 B1

600

Receive a volume of paste from supply line using bypass line ⟋602

Receive signals indicative of pressure and flow rate of the paste flowing through plurality of pipes of the bypass line using controller ⟋604

Determine viscosity of the paste based on the pressure received from plurality of pressure sensors of the bypass line and the flow rate of the paste using the controller ⟋606

Discharge the paste through one outlet of the plurality of outlets based on the determined viscosity using the controller ⟋608

Control the extruder and the pressure valve using the controller, when the determined viscosity of the paste is different from target viscosity ⟋610

Fig. 6

Fig. 7

Fig. 8

Fig. 9

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018003606 A1

- WO 2020216491 A1